(19) Europäisches Patentamt
European Patent Office
Office européen des brevets

(11) **EP 2 449 040 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(21) Anmeldenummer: **10728133.9**

(22) Anmeldetag: **22.06.2010**

(51) Int Cl.:
*C09D 5/36* (2006.01)     *C09D 11/101* (2014.01)
*C09D 11/322* (2014.01)   *C09D 11/40* (2014.01)
*C09C 1/00* (2006.01)

(86) Internationale Anmeldenummer:
**PCT/EP2010/003740**

(87) Internationale Veröffentlichungsnummer:
**WO 2011/000491 (06.01.2011 Gazette 2011/01)**

(54) **DRUCKTINTE, INSBESONDERE TINTENSTRAHLTINTE, ENTHALTEND PERLGLANZPIGMENTE AUF BASIS VON FEINEN UND DÜNNEN SUBSTRATEN**

PRINTING INK SUCH AS AN INK JET INK COMPRISING NACREOUS PIGMENTS BASED ON FINE AND THIN SUBSTRATES

ENCRE D'IMPRESSION EN PARTICULIER ENCRE À JET D'ENCRE COMPRENANT DES PIGMENTS NACRÉS À BASE DE SUBSTRATS FINS ET MINCES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.06.2009 DE 102009031266**

(43) Veröffentlichungstag der Anmeldung:
**09.05.2012 Patentblatt 2012/19**

(73) Patentinhaber: **Eckart GmbH**
**91235 Hartenstein (DE)**

(72) Erfinder:
• GRÜNER, Michael
**91275 Auerbach (DE)**
• KAUPP, Günter
**91284 Neuhaus (DE)**
• ENGEL, Stefan
**90607 Rückersdorf (DE)**

• MENDLER, Barbara
**88709 Meersburg (DE)**
• SCHMIDT, Ulrich
**91217 Hersbruck (DE)**

(74) Vertreter: **Walcher, Armin**
**Louis, Pöhlau, Lohrentz**
**Patentanwälte**
**Postfach 30 55**
**90014 Nürnberg (DE)**

(56) Entgegenhaltungen:
DE-A1- 10 315 775     DE-A1- 19 618 569
DE-A1- 19 727 767     DE-A1-102004 041 592
DE-A1-102007 041 027  DE-T2- 60 318 235
US-A- 6 019 831       US-A1- 2006 223 910
US-A1- 2008 017 076

EP 2 449 040 B1

**Beschreibung**

Die Erfindung betrifft eine Drucktinte, insbesondere Tintenstrahltinte, enthaltend Perlglanzpigmente auf Basis von feinen und dünnen Substraten. Weiterhin betrifft die Erfindung die Herstellung einer solchen Drucktinte, insbesondere Tintenstrahltinte, als auch die Verwendung von Perlglanzpigmenten auf Basis von feinen und dünnen Substraten in einer Drucktinte, insbesondere Tintenstrahltinte.

Beim Drucken im Tintenstrahlverfahren werden winzige Tropfen einer Tintenstrahltinte ohne physischen Kontakt zwischen Drucker und zu bedruckendem Substrat direkt auf letzterem aufgebracht. Die Platzierung der einzelnen Tropfen auf dem zu bedruckenden Substrat wird elektronisch kontrolliert. Der Tintenstrahldruck ist eine wichtige Technologie um einerseits verschiedenste Substrate wie beispielsweise Papier, Karton, Folien etc. oder andererseits Produkte wie z.B. Flaschen, Dosen etc. mit diversen Daten oder Bildern zu bedrucken. Auch zerbrechliche Gegenstände, wie z.B. Eier, können mit Tintenstrahldrucken versehen werden. Durch Anwendung der Tintenstrahl-Technologie ist es möglich, mit hoher Auflösung zu drucken.

In der Vergangenheit wurden verschiedene Prinzipien für die Tropfenbildung entwickelt. Diese kann beispielsweise elektrostatisch, magnetisch, piezoelektrisch, elektrothermisch, über mechanische Mikroventile oder durch Funkenentladung erfolgen. Unabhängig von der Art der Tropfenbildung wird die Tintenstrahl-Technologie grundsätzlich in zwei Kategorien unterteilt, zum einen in die "continuous ink jet" (CIJ) und zum anderen in die "impulse" oder "drop-on-demand" (DOD) Technologie.

Bei der "continuous ink jet" Technologie fließt Tinte unter Druck durch eine Düse und bildet Tintentropfen, die in einem kontinuierlichen Strahl auf ein Substrat aufgebracht werden.

Im Unterschied hierzu wird bei der "impulse ink jet" Technologie der Tintenvorrat unter oder nahe dem Atmosphärendruck aufbewahrt. Ein Tintentropfen wird aus einer Düse nur dann freigesetzt, wenn eine kontrollierte Anregung der tropfenbildenden Einheit stattfindet. Diese Technologie wird hauptsächlich in Farbdruckern eingesetzt.

Nachdem die Tropfen der Tintenstrahltinte auf das zu bedruckende Substrat aufgebracht wurden, wird die Tintenstrahltinte getrocknet oder ausgehärtet. Dies kann beispielsweise unter Einwirkung von Hitze oder UV-Licht erfolgen. Dieser Prozess setzt unmittelbar nach Aufbringen der Tinte auf dem zu bedruckenden Substrat ein. Die Zeit zur Trocknung oder Aushärtung liegt abhängig vom Trocknungs- oder Härtungsprozess zwischen Sekundenbruchteilen und Minuten.

In den letzten Jahren wurden Farbdrucker entwickelt, die Farbdrucke in den Grundfarben gelb, cyan, magenta und schwarz ermöglichen. Diese Farben werden weitverbreitet als Prozessfarben in bewährten Druckprozessen wie Lithographie, Tief- oder Flexodruck genutzt.

Zur weiteren Qualitätsverbesserung von Farbdrucken, besonders im Hinblick auf die ansteigenden Anwendungen von Werbedrucken, werden sogenannte Sonderfarben ("spot colours") eingesetzt. Diese Sonderfarben bestehen aus einer reinen oder einer gemischten Tinte und werden in einem einzelnen Durchgang verdruckt. Diese Sonderfarben können zusätzlich zu den vier Grundfarben unter anderem die Farben orange, grün oder jede weitere Farbe sein, um die Farbskala und die Lebendigkeit des Druckbildes zu erhöhen.

Soll dem Farbdruck ein Metalleffekt verliehen werden, können der Tinte Metalleffektpigmente zugesetzt werden. Um einen gold- oder silberfarbenen Druck zu erhalten, werden in der Tintenstrahltinte gold- oder silberfarbene Metalleffektpigmente eingesetzt. Als goldfarbene Metalleffektpigmente können beispielsweise aus einer Kupfer-Zink-Legierung hergestellte Messingpigmente, sogenannte Goldbronzen, eingesetzt werden. Bei den Messingpigmenten wird durch das Kupfer-Zink-Verhältnis der Farbton der Legierung bestimmt. Goldbronzepigmente werden in charakteristischen Naturfarbtönen als "Bleichgold" mit einem Kupferanteil von ca. 90 Gew.-%, Rest Zink, als "Reichbleichgold" mit einem Kupferanteil von ca. 85 Gew.-%, Rest Zink und als "Reichgold" mit einem Kupferanteil von ca. 70 Gew.-%, Rest Zink, kommerziell gehandelt. Alternativ können goldfarbene Drucke auch durch Mischung von silberfarbenen Metalleffektpigmenten mit gelben und gegebenenfalls roten Farbmitteln erhalten werden.

Als silberfarbene Metalleffektpigmente können beispielsweise plättchenförmige Aluminiumpigmente eingesetzt werden. Aus der WO 2009/010288 A2 sind Tintenstrahltinten, die dünne Aluminiumpigmente enthalten, bekannt. Tintenstrahltinten, die Metalleffektpigmente enthalten, sind unter dem Handelsnamen Jetfluid (Fa. Eckart GmbH) kommerziell erhältlich.

Ist kein rein gold- oder silberfarbener Tintenstrahldruck erwünscht, sondern ein metallisch erscheinendes Druckbild einer bestimmten Farbe, können der Tintenstrahltinte neben den Metalleffektpigmenten weitere Farbmittel in der gewünschten zu erzielenden Farbe zugegeben werden. Alternativ können die Metalleffektpigmente enthaltenden Tintenstrahltinten zusammen mit weiteren im Drucksystem vorhandenen Tintenstrahltinten (Prozessfarben) verdruckt werden und somit auf dem zu bedruckenden Substrat vermischt werden. Je nach gewünschtem zu erzielendem Effekt kann auch zunächst eine Metalleffektpigmente enthaltende Tintenstrahltinte verdruckt und anschließend mit einer Prozessfarbe überdruckt werden.

In EP 1 554 345 B1 werden wässrige Tintenzusammensetzungen für das Tintenstrahldruckverfahren beschrieben, die Drucke mit metallischem oder vom Betrachtungswinkel abhängigem Erscheinungsbild ermöglichen. Die in der Tintenzusammensetzung enthaltenen Pigmente umfassen einen Kern, bestehend aus einem transparenten oder metallisch reflektierenden Material, und mindestens einer Beschichtung, die aus einem oder mehreren Siliziumoxiden ($SiO_x$-Schicht) besteht. Der mittlere Teilchendurchmesser liegt bei mindestens 2 $\mu$m.

Die DE 19727767 A betrifft strahlungshärtbare Tintenstrahltinten, die mindestens ein feinkörniges organisches oder anorganisches Pigment enthalten. Interferenzpigmente werden als Beispiele für anorganische Pigmente erwähnt. Vorzugsweise haben 95%, besonders bevorzugt 99% der Pigmente, eine Teilchengröße < 1 $\mu$m.

Die US 2006/0223910 A1 offenbart Effektpigmente mit einem Glitzereffekt mit spezialisierter Partikelgrößenverteilung.

Das US-Patent US 6,019,831 offenbart Eisenoxid enthaltende nichtglänzende Farbpigmente.

Die DE 10 2004 041 592 A1 offenbart $SiO_2$ beschichtete Perlglanzpigmente.

Die DE 103 15 775 A1 offenbart dünne deckende Aluminiumpigmente.

Die DE 196 18 569 A1 offenbart mehrschichtige Interferenzpigmente.

Die US 2008/0017076 A1 offenbart Perlglanzpigmente mit hoher Brillianz und starkem Chroma.

Die DE 10 2007 041 027 A1 offenbart Effektpigmente auf Basis von aus anorganischorganischen Mischphasen gebildeten Substraten.

Die DE 603 18 235 T2 offenbart Verfahren zum Bedrucken von Substraten mit Hilfe des Tintenstrahldruck-Verfahrens.

Eine gängige Methode zur Erzielung eines Perlglanzeffekts im Druckbild ist die Verwendung eines zu bedruckenden Substrats, welches bereits mit Perlglanzpigmenten vorbeschichtet ist, wie dies z.B. in JP 2003080836A beschrieben ist. Allerdings ist es bei Verwendung eines derartigen zu bedruckenden Substrats nachteiligerweise nicht möglich das Substrat nur an ausgewählten Stellen mit einem Perlglanzeffekt zu versehen.

Aufgabe der vorliegenden Erfindung ist es, eine Perlglanzpigmente enthaltende Drucktinte, insbesondere Tintenstrahltinte, bereitzustellen, die dem zu bedruckenden Substrat den für Perlglanzpigmente typischen Tiefenglanz bei gleichzeitig durchscheinendem Substrat verleiht. Die Auflösung des Druckbildes soll mindestens 300 dpi betragen. Weiterhin soll der Druckkopf durch die Perlglanzpigmente in der Drucktinte, insbesondere Tintenstrahltinte nicht verstopft werden.

Die der Erfindung zugrundeliegende Aufgabe wird durch die Bereitstellung einer Drucktinte gemäß Anspruch 1 gelöst.

Bevorzugte Weiterbildungen der erfindungsgemäßen Drucktinte, insbesondere Tintenstrahltinte, sind in den Unteransprüchen 2 bis 12 angegeben.

Die der Erfindung zugrundeliegende Aufgabe wird auch durch ein Verfahren zur Herstellung der erfindungsgemäßen Drucktinte, insbesondere Tintenstrahltinte, gelöst, das folgende Schritte umfasst:

(a1) Klassieren von weitgehend transparenten plättchenförmigen Substraten

(b1) Beschichten des in Schritt (a1) erhaltenen klassierten Substrates mit einer einzigen optisch wirksamen, vorzugsweise hochbrechenden, Schicht unter Erhalt eines Perlglanzpigmentes mit einem $d_{90}$-Wert der Summenhäufigkeitsverteilung der volumengemittelten Größenverteilungsfunktion aus einem Bereich von 3,5 bis 15 $\mu$m,

oder

(a2) Beschichten von weitgehend transparenten plättchenförmigen Substraten mit einer einzigen optisch wirksamen, vorzugsweise hochbrechenden, Schicht,

(b2) Klassieren des in Schritt (a2) erhaltenen Perlglanzpigments unter Erhalt eines Perlglanzpigmentes mit einem $d_{90}$-Wert der Summenhäufigkeitsverteilung der volumengemittelten Größenverteilungsfunktion aus einem Bereich von 3,5 bis 15 $\mu$m,

und anschließend

(c) Mischen der erhaltenen Perlglanzpigmente mit mindestens einem Lösemittel und/ oder mindestens einer strahlungshärtbaren Komponente und/ oder mindestens einem Bindemittel unter Erhalt der Drucktinte, vorzugsweise Tintenstrahltinte.

Beim Verfahren zur Herstellung der erfindungsgemäßen Drucktinte, vorzugsweise Tintenstrahltinte, wird das Verfahren mit den Verfahrensschritten in der Reihenfolge (a1) + (b1) + (c) bevorzugt.

Die der Erfindung zugrundeliegende Aufgabe wird auch durch die Verwendung von Perlglanzpigmenten gemäß einem der Ansprüche 1 bis 12, die ein weitgehend transparentes plättchenförmiges Substrat mit einer Dichte $\rho_S$ und einer einzigen optisch wirksamen Beschichtung mit einer Dichte $\rho_M$ aufweisen, mit einem $d_{90}$-Wert der Summenhäufigkeitsverteilung der volumengemittelten Größenverteilungsfunktion aus einem Bereich von 3,5 bis 15 $\mu$m in einer Drucktinte, vorzugsweise Tintenstrahltinte, gelöst.

Es hat sich völlig überraschend herausgestellt, dass Perlglanzpigmente in Drucktinten, insbesondere in Tintenstrahltinten, verwendet werden können. Perlglanzpigmente sind im Unterschied zu den biegsamen Metalleffektpigmenten spröde und können bei mechanischer Belastung leicht zerbrechen. Insbesondere im Hinblick auf die während eines Tintenstrahl-Druckvorganges an plättchenförmige Pigmente angreifenden Kräfte ist erwartet worden, dass die Perlglanzpigmente teilweise oder vollständig zerbrechen und mithin die optische Qualität des sodann erhaltenen Druckbilds beeinträchtigt ist. Die erfindungsgemäß zu verwendenden Perlglanzpigmente weisen im Hinblick auf den kleinen Pigmentdurchmesser eine geringe Pigmentdicke auf. Ungeachtet der geringen Pigmentdicke zerbrechen die erfindungsgemäßen Perlglanzpigmente überraschenderweise jedoch nicht.

Des Weiteren hat sich überraschend herausgestellt, dass es auch zu keinen merklichen Abplatzungen, vorzugsweise zu keinen Abplatzungen, der optisch wirksamen Beschichtung(en) kommt. Mithin können die erfindungsgemäß zu verwendenden Perlglanzpigmente gut mit den weiteren Komponenten vermengt oder in Drucktinten, vorzugsweise Tintenstrahltinten, beispielsweise unter Rühren und/ oder unter Einwirkung von Ultraschall, eingearbeitet werden.

Schließlich hat sich überraschend gezeigt, dass sich etwaig abgesetzte und/ oder agglomerierte Perlglanzpigmente ohne weiteres wieder dispergieren lassen.

Als weitgehend transparente plättchenförmige Substrate der in der erfindungsgemäßen Drucktinte, vorzugsweise Tintenstrahltinte, verwendeten Perlglanzpigmente werden Substrate aus natürlichem Glimmer, synthetischem Glimmer, Glasplättchen (die auch als Glasflakes bezeichnet werden), $SiO_2$-Plättchen, $Al_2O_3$-Plättchen, oder Mischungen davon verwendet oder bezeichnet. Erfindungsgemäß werden mithin natürlicher Glimmer, synthetischer Glimmer, $SiO_2$-Plättchen, Glasplättchen und/ oder $Al_2O_3$-Plättchen verwendet. Äußerst bevorzugt sind natürlicher Glimmer und/ oder synthetischer Glimmer.

Wenn die in der erfindungsgemäßen Drucktinte, vorzugsweise Tintenstrahltinte, verwendeten Perlglanzpigmente auf Glasplättchen basieren, so ist es bevorzugt, dass die Perlglanzpigmente eine mittlere Höhe > 1 $\mu$m aufweisen.

Die in der erfindungsgemäßen Drucktinte, vorzugsweise Tintenstrahltinte, verwendeten Perlglanzpigmente weisen eine einzige optisch wirksame Beschichtung, vorzugsweise in Form einer hochbrechenden Metalloxidschicht, mit einer Dichte $\rho_M$ auf. Unter der Dichte $\rho_M$ wird die Dichte der Metalloxidschicht verstanden.

Die Begriffe "Beschichtung" und "Schicht" werden bei der vorliegenden Erfindung austauschbar verwendet.

Ferner wird unter einer optisch wirksamen Beschichtung der Perlglanzpigmente eine Metalloxidschicht, vorzugsweise hochbrechende Metalloxidschicht, verstanden. Der Brechungsindex $n_M$ von hochbrechenden Metalloxidschichten liegt vorzugsweise oberhalb von 1,8, weiter bevorzugt oberhalb von 2,0. Als sehr geeignet haben sich auch Brechungsindices von mehr als 2,2 oder mehr als 2,6 erwiesen. Vorzugsweise liegt die Schichtdicke der hochbrechenden Metalloxidschicht in einem Bereich zwischen 10 und 300 nm, weiter bevorzugt zwischen 20 und 200 nm, noch weiter bevorzugt zwischen 25 und 150 nm.

Bei einer bevorzugten Ausführungsform weisen die Perlglanzpigmente eine hochbrechende Beschichtung auf. Die hochbrechende Beschichtung hat bevorzugt einen Brechungsindex $n_M$ > 2,0 und besonders bevorzugt einen Brechungsindex $n_M$ > 2,2.

Gemäß einer sehr bevorzugten Ausführungsform der Erfindung ist die optisch wirksame Beschichtung der Perlglanzpigmente eine (Zahl: 1) hochbrechende Metalloxidschicht.

Besonders bevorzugt ist, dass die hochbrechende Beschichtung eine Metalloxidschicht und/ oder eine Metallhydroxidschicht und/ oder eine Metalloxidhydratschicht aufweist oder ist.

Als hochbrechende Schichten werden bevorzugt hochbrechende Metalloxide, Metallhydroxide und/ oder Metalloxidhydrate verwendet. Als Metalloxide werden bevorzugt Metalloxide der Gruppe bestehend aus Titanoxid, Eisenoxid, Ceroxid, Chromoxid, Zinnoxid, Zirkoniumoxid, Kobaltoxid und Mischungen davon verwendet. Anstelle der oder zusätzlich zu den vorstehend angegebenen Oxiden können selbstverständlich auch die entsprechenden Metallhydroxide und/ oder Metalloxidhydrate verwendet werden.

Das Titanoxid kann dabei aus der Gruppe, die aus Rutil, Anatas und Pseudobrookit, besteht, ausgewählt werden. Vorzugsweise liegt das Titanoxid als $TiO_2$ in der Rutilmodifikation vor.

Das Eisenoxid wird vorzugsweise aus der Gruppe, die aus Hämatit, Goethit und/ oder Magnetit besteht, ausgewählt. Vorzugsweise liegt das Eisenoxid als $Fe_2O_3$ (Hämatit) und/ oder $Fe_3O_4$ (Magnetit) vor.

Besonders bevorzugt sind $TiO_2$ und $Fe_2O_3$ sowie Mischungen und Kombinationen hiervon. In Mischungen dieser Oxide liegt das $TiO_2$ in einer Brookitmodifikation oder aber auch als Ilmenit vor.

Als niedrigbrechende Schichten der Perlglanzpigmente werden vorzugsweise niedrigbrechende Metalloxidschichten insbesondere aus Siliziumoxid/-hydroxid, vorzugsweise $SiO_2$, Aluminiumoxid, vorzugsweise $Al_2O_3$, AlOOH, Boroxid, oder Mischungen davon verwendet. Besonders bevorzugt werden Siliziumoxid und/ oder Aluminiumoxid, verwendet.

Gemäß einer bevorzugten Weiterbildung der Erfindung weisen die in der Drucktinte, vorzugsweise Tintenstrahltinte, enthaltenen Perlglanzpigmente auf der optisch wirksamen, vorzugsweise hochbrechenden Schicht, mindestens eine weitere Schutzschicht auf.

Die mindestens eine weitere Schutzschicht kann dabei mindestens eine Metalloxidschicht, deren Metalloxide aus der Gruppe, die aus $SiO_2$, $Al_2O_3$, Ceroxid und Mischungen und Kombinationen davon, besteht, ausgewählt werden. Als Schutzschicht kann auch eine Kunststoffbeschichtung, beispielsweise Polyacrylatschicht, aufgebracht werden.

Besonders bevorzugt sind hierbei Schutzschichten aus $SiO_2$ oder aus Ceroxid in Kombination mit $SiO_2$, wie

sie in den EP 1727864 A1 und EP 1682622 A1 beschrieben sind, die hiermit unter Bezugnahme aufgenommen sind.

Der $d_{90}$-Wert der Summenhäufigkeitsverteilung der volumengemittelten Größenverteilungsfunktion, wie sie durch Laserbeugungsmethoden erhalten wird, gibt an, dass 90% der Perlglanzpigmente einen Durchmesser aufweisen, der gleich oder kleiner als der jeweils angegebene Wert, ist. Bevorzugt wird hierbei die Größenverteilungskurve mit einem Gerät der Firma Cilas (Gerät: Cilas 1064) bestimmt. Entsprechendes gilt für die jeweils angegebenen $d_{50}$-, $d_{90}$-, $d_{95}$-, $d_{98}$-Werte.

Der $d_{90}$-Wert ist ein Maß für den Grobanteil. Je kleiner dieser Wert ist, desto besser sind die erfindungsgemäßen perlglanzpigmenthaltigen Drucktinten, insbesondere Tintenstrahltinten, in unterschiedlichen Tintenstrahldruckköpfen einsetzbar. Erfindungsgemäß weisen die Perlglanzpigmente eine Größenverteilung mit einem $d_{90}$-Wert aus einem Bereich von 3,5 bis 15 $\mu$m auf. Bevorzugt weisen die Perlglanzpigmente eine Größenverteilung mit einem $d_{90}$-Wert aus einem Bereich von 4 bis 13 $\mu$m, weiter bevorzugt aus einem Bereich von 5,5 bis 12 $\mu$m, besonders bevorzugt aus einem Bereich von 5 bis 10 $\mu$m, ganz besonders bevorzugt aus einem Bereich von 5,1 bis 8 $\mu$m auf.

Gemäß einer weiteren Ausführungsform der Erfindung weisen die Perlglanzpigmente eine Größenverteilung mit einem $d_{95}$-Wert aus einem Bereich von 5 bis 20 $\mu$m, bevorzugt aus einem Bereich von 5,5 bis 15 $\mu$m, weiter bevorzugt aus einem Bereich von 6 bis 13 $\mu$m, besonders bevorzugt aus einem Bereich von 6,5 bis 10 $\mu$m, auf.

Gemäß einer weiteren Ausführungsform der Erfindung weisen die Perlglanzpigmente eine Größenverteilung mit einem $d_{98}$-Wert aus einem Bereich von 6 bis 25 $\mu$m, bevorzugt aus einem Bereich von 6,5 bis 20 $\mu$m, weiter bevorzugt aus einem Bereich von 7 bis 15 $\mu$m, besonders bevorzugt aus einem Bereich von 7,5 bis 13 $\mu$m, auf.

Gemäß einer weiteren Ausführungsform der Erfindung weisen die Perlglanzpigmente eine Größenverteilung mit einem $d_{50}$-Wert aus einem Bereich von 2 bis 10 $\mu$m, bevorzugt aus einem Bereich von 2,5 bis 8 $\mu$m, weiter bevorzugt aus einem Bereich von 3 bis 7,5 $\mu$m, besonders bevorzugt aus einem Bereich von 3,5 bis 6 $\mu$m, auf.

Bei einer bevorzugten Ausführungsform weist das Substrat der Perlglanzpigmente eine mittlere Höhe (Schichtdicke) $h_S$ aus einem Bereich von 40 bis 150 nm, bevorzugt aus einem Bereich von 50 bis 140 nm, weiter bevorzugt aus einem Bereich von 60 bis 130 nm, weiter bevorzugt aus einem Bereich von 70 bis 120 nm und besonders bevorzugt aus einem Bereich von 80 bis 110 nm auf.

Die Standardabweichung bei der mittleren Höhe $h_S$ liegt vorzugsweise in einem Bereich von 25 bis 80 %, weiter bevorzugt in einem Bereich von 28 bis 60 % und besonders bevorzugt in einem Bereich von 30 bis 50 %. Unterhalb von 40 nm Schichtdicke können die Perlglanzpigmente mechanisch zu zerbrechlich sein. Des Weiteren dauern die Beschichtungszeiten mit hochbrechendem Metalloxid aufgrund der extrem hohen spezifischen Oberfläche zu lange, um wirtschaftlich vertretbar zu sein. Unter der spezifischen Oberfläche wird die Oberfläche pro Gewichtseinheit verstanden. Da die Schichtdicke der Substrate der erfindungsgemäßen Perlglanzpigmente äußerst gering ist, weisen diese Substrate pro Gewichtseinheit eine sehr große Oberfläche im Vergleich zu herkömmlichen Substraten auf.

Herstellungsbedingt sind die Teilchendicken und die Teilchengrößen der Substrate der Perlglanzpigmente weitgehend voneinander abhängig. Große Teilchengrößen bedingen entsprechend große Teilchendicken und umgekehrt. Für die Verdruckbarkeit der erfindungsgemäßen Drucktinten, vorzugsweise Tintenstrahltinten, ist die Teilchengröße der Perlglanzpigmente maßgeblich. Zu grobe und somit entsprechend dicke Perlglanzpigmente sind für kommerziell erhältliche Tintenstrahldruckköpfe weniger geeignet. Oberhalb einer mittleren Höhe $h_S$ des Substrats der Perlglanzpigmente von 150 nm lassen sich die erfindungsgemäßen Drucktinten, vorzugsweise Tintenstrahltinten, in kommerziell erhältlichen Tintenstrahldruckköpfen unzureichend verdrucken.

Die in der erfindungsgemäßen Drucktinte, vorzugsweise Tintenstrahltinte, enthaltenen äußerst feinen Perlglanzpigmente basieren mithin auf einem weitgehend transparenten Substrat mit einem geringen $d_{90}$-Wert und einer geringen mittleren Schichtdicke $h_S$. Somit wird die Verdruckbarkeit in kommerziell erhältlichen Tintenstrahldruckköpfen gewährleistet sowie darüber hinaus überraschenderweise eine sehr gute mechanische Stabilität. Gleichzeitig besitzen die Perlglanzpigmente starke Interferenzfarben und sind somit für farbstarke qualitativ hochwertige Drucke mit Perlglanzeffekt einsetzbar.

Es hat sich gezeigt, dass nachstehende Kombinationen von $d_{90}$ bzw. $d_{95}$ und $h_S$ besonders geeignet sind. Bei diesen nachstehenden Kombinationen werden sehr kleine und feine Perlglanzpigmente mit zugleich überraschend hoher mechanischer Stabilität beim Verdrucken der erfindungsgemäßen Drucktinte, vorzugsweise Tintenstrahltinte, in kommerziell erhältlichen Tintenstrahldruckköpfen erhalten. Äußerst überraschend war des Weiteren, dass diese kleinen und feinen Perlglanzpigmente ungeachtet der geringen Größe trotzdem den für Perlglanzpigmente typischen Tiefenglanz aufweisen.

Bei einer weiteren Ausführungsform enthalten die erfindungsgemäßen Drucktinten, vorzugsweise Tintenstrahltinten, vorzugsweise Perlglanzpigmente, deren $d_{90}$-Wert der Summenhäufigkeitsverteilung der volumengemittelten Größenverteilungsfunktion in einem Bereich von 3,5 bis 15 $\mu$m, vorzugsweise in einem Bereich von 4 bis 13 $\mu$m, und deren mittlere Höhe $h_S$ in einem Bereich von 40 bis 150 nm, vorzugsweise in einem Bereich von 50 bis 140 nm, liegt.

Bei einer weiteren bevorzugten Ausführungsform enthalten die erfindungsgemäßen Drucktinten, vorzugsweise Tintenstrahltinten, Perlglanzpigmente, deren $d_{90}$-Wert der Summenhäufigkeitsverteilung der volumengemittelten Größenverteilungsfunktion in einem Bereich von 4,5 bis 12 $\mu$m, vorzugsweise in einem Bereich von 5 bis 10 $\mu$m, und deren

mittlere Höhe $h_S$ in einem Bereich von 60 bis 130 nm, vorzugsweise in einem Bereich von 70 bis 120 nm, liegt.

Bei einer besonders bevorzugten Ausführungsform enthalten die erfindungsgemäßen Drucktinten, vorzugsweise Tintenstrahltinten, Perlglanzpigmente, deren $d_{90}$-Wert der Summenhäufigkeitsverteilung der volumengemittelten Größenverteilungsfunktion in einem Bereich von 5,1 bis 8 $\mu$m und deren mittlere Höhe $h_S$ in einem Bereich von 80 bis 110 nm liegt.

Bei einer weiteren erfindungsgemäßen Ausführungsform enthalten die erfindungsgemäßen Drucktinten, vorzugsweise Tintenstrahltinten, Perlglanzpigmente, deren $d_{95}$-Wert der Summenhäufigkeitsverteilung der volumengemittelten Größenverteilungsfunktion in einem Bereich von 5 bis 20 $\mu$m, vorzugsweise in einem Bereich von 5,5 bis 15 $\mu$m, und deren mittlere Höhe $h_S$ in einem Bereich von 40 bis 150 nm, vorzugsweise in einem Bereich von 50 bis 140 nm, liegt.

Bei einer weiteren Ausführungsform enthalten die erfindungsgemäßen Drucktinten, vorzugsweise Tintenstrahltinten, Perlglanzpigmente, deren $d_{95}$-Wert der Summenhäufigkeitsverteilung der volumengemittelten Größenverteilungsfunktion in einem Bereich von 6 bis 13 $\mu$m, vorzugsweise in einem Bereich von 6,5 bis 10 $\mu$m, und deren mittlere Höhe $h_S$ in einem Bereich von 60 bis 130 nm, vorzugsweise in einem Bereich von 70 bis 120 nm, liegt.

Bei einer weiteren Ausführungsform enthalten die erfindungsgemäßen Drucktinten, vorzugsweise Tintenstrahltinten, Perlglanzpigmente, deren $d_{90}$-Wert der Summenhäufigkeitsverteilung der volumengemittelten Größenverteilungsfunktion in einem Bereich von 3,5 bis 15 $\mu$m, vorzugsweise in einem Bereich von 4 bis 13 $\mu$m, und deren $d_{95}$-Wert der Summenhäufigkeitsverteilung der volumengemittelten Größenverteilungsfunktion in einem Bereich von 5 bis 20 $\mu$m, vorzugsweise in einem Bereich von 5,5 bis 15 $\mu$m, liegt.

Bei einer weiteren Ausführungsform enthalten die erfindungsgemäßen Drucktinten, vorzugsweise Tintenstrahltinten, Perlglanzpigmente, deren $d_{90}$-Wert der Summenhäufigkeitsverteilung der volumengemittelten Größenverteilungsfunktion in einem Bereich von 4,5 bis 12 $\mu$m, vorzugsweise in einem Bereich von 5 bis 10 $\mu$m, und deren $d_{95}$-Wert der Summenhäufigkeitsverteilung der volumengemittelten Größenverteilungsfunktion in einem Bereich von 6 bis 13 $\mu$m, vorzugsweise ein einem Bereich von 6,5 bis 10 $\mu$m, liegt.

In einer bevorzugten Ausführungsform weisen die in der erfindungsgemäßen Drucktinte, insbesondere Tintenstrahltinte, enthaltenen Perlglanzpigmente eine einzige Metalloxidschicht auf. Vorzugsweise besteht folgender Zusammenhang zwischen dem Metalloxidgehalt in Gew.-%, bezogen auf das Gesamtgewicht von Metalloxid und Substrat, und der mittleren Schichtdicke der Metalloxidbeschichtung: ein Metalloxidgehalt von 30 - 80 Gew.-% bei einer mittleren Metalioxidschichtdicke von über 20 bis 50 nm;
ein Metalloxidgehalt von 50 - 85 Gew.-% bei einer mittleren Metalioxidschichtdicke von über 50 bis 75 nm;
ein Metalloxidgehalt von 59 - 89 Gew.-% bei einer mittleren Metalioxidschichtdicke von über 75 bis 95 nm;
ein Metalloxidgehalt von 66 - 92 Gew.-% bei einer mittleren Metalioxidschichtdicke von über 95 bis 125 nm;
ein Metalloxidgehalt von 69 - 96 Gew.-% bei einer mittleren Metalioxidschichtdicke von über 125 bis 215 nm.

Gemäß einer bevorzugten Variante der Erfindung weisen die in der Drucktinte, insbesondere Tintenstrahltinte, enthaltenen Perlglanzpigmente eine Metalloxidschicht aus $TiO_2$ und/ oder $Fe_2O_3$ und ein Substrat aus Glimmer auf. Bei dem Glimmer kann es sich um synthetischen oder natürlichen Glimmer handeln.

Besonders bevorzugt besteht folgender Zusammenhang zwischen dem $TiO_2$-Gehalt in Gew.-%, bezogen auf das Gesamtgewicht von $TiO_2$ und Glimmer, und der mittleren Schichtdicke der $TiO_2$-Beschichtung:

ein $TiO_2$-Gehalt von 35 - 62 Gew.-% bei einer mittleren $TiO_2$-Schichtdicke von über 20 bis 35 nm;
ein $TiO_2$-Gehalt von 40 - 74 Gew.-% bei einer mittleren $TiO_2$-Schichtdicke von über 35 bis 45 nm;
ein $TiO_2$-Gehalt von 45 - 78 Gew.-% bei einer mittleren $TiO_2$-Schichtdicke von über 45 bis 55 nm;
ein $TiO_2$-Gehalt von 50 - 82 Gew.-% bei einer mittleren $TiO_2$-Schichtdicke von über 55 bis 65 nm;
ein $TiO_2$-Gehalt von 55 - 85 Gew.-% bei einer mittleren $TiO_2$-Schichtdicke von über 65 bis 75 nm;
ein $TiO_2$-Gehalt von 60 - 86,5 Gew.-% bei einer mittleren $TiO_2$-Schichtdicke von über 75 bis 85 nm;
ein $TiO_2$-Gehalt von 65 - 88 Gew.-% bei einer mittleren $TiO_2$-Schichtdicke von über 85 bis 95 nm;
ein $TiO_2$-Gehalt von 67 - 89 Gew.-% bei einer mittleren $TiO_2$-Schichtdicke von über 95 bis 105 nm;
ein $TiO_2$-Gehalt von 68 - 90 Gew.-% bei einer mittleren $TiO_2$-Schichtdicke von über 105 bis 115 nm;
ein $TiO_2$-Gehalt von 69 - 91 Gew.-% bei einer mittleren $TiO_2$-Schichtdicke von über 115 bis 125 nm;
ein $TiO_2$-Gehalt von 70 - 92 Gew.-% bei einer mittleren $TiO_2$-Schichtdicke von über 125 bis 135 nm;
ein $TiO_2$-Gehalt von 71 - 92,5 Gew.-% bei einer mittleren $TiO_2$-Schichtdicke von über 135 bis 145 nm;
ein $TiO_2$-Gehalt von 72 - 93 Gew.-% bei einer mittleren $TiO_2$-Schichtdicke von über 145 bis 155 nm;
ein $TiO_2$-Gehalt von 73 - 93 Gew.-% bei einer mittleren $TiO_2$-Schichtdicke von über 155 bis 165 nm;
ein $TiO_2$-Gehalt von 73,5 - 93,5 Gew.-% bei einer mittleren $TiO_2$-Schichtdicke von über 165 bis 175 nm;
ein $TiO_2$-Gehalt von 74 - 94 Gew.-% bei einer mittleren $TiO_2$-Schichtdicke von über 175 bis 185 nm;
ein $TiO_2$-Gehalt von 74,5 - 94 Gew.-% bei einer mittleren $TiO_2$-Schichtdicke von über 185 bis 195 nm;
ein $TiO_2$-Gehalt von 75 - 94,5 Gew.-% bei einer mittleren $TiO_2$-Schichtdicke von über 195 bis 205 nm;
ein $TiO_2$-Gehalt von 75,5 - 95 Gew.-% bei einer mittleren $TiO_2$-Schichtdicke von über 205 bis 215 nm.

Des weiteren besteht vorzugsweise folgender Zusammenhang zwischen dem $TiO_2$-Gehalt in Gew.-%, bezogen auf das Gesamtgewicht von $TiO_2$ und Glimmer, und der mittleren Schichtdicke der $TiO_2$-Beschichtung:

ein $TiO_2$-Gehalt von 47,5 - 62 Gew.-% bei einer mittleren $TiO_2$-Schichtdicke von über 20 bis 35 nm;
ein $TiO_2$-Gehalt von 58 - 74 Gew.-% bei einer mittleren $TiO_2$-Schichtdicke von über 35 bis 45 nm;
ein $TiO_2$-Gehalt von 63 - 78 Gew.-% bei einer mittleren $TiO_2$-Schichtdicke von über 45 bis 55 nm;
ein $TiO_2$-Gehalt von 67 - 82 Gew.-% bei einer mittleren $TiO_2$-Schichtdicke von über 55 bis 65 nm;
ein $TiO_2$-Gehalt von 70 - 85 Gew.-% bei einer mittleren $TiO_2$-Schichtdicke von über 65 bis 75 nm;
ein $TiO_2$-Gehalt von 73,5 - 86,5 Gew.-% bei einer mittleren $TiO_2$-Schichtdicke von über 75 bis 85 nm;
ein $TiO_2$-Gehalt von 75 - 88 Gew.-% bei einer mittleren $TiO_2$-Schichtdicke von über 85 bis 95 nm;
ein $TiO_2$-Gehalt von 76,5 - 89 Gew.-% bei einer mittleren $TiO_2$-Schichtdicke von über 95 bis 105 nm;
ein $TiO_2$-Gehalt von 78,5 - 90 Gew.-% bei einer mittleren $TiO_2$-Schichtdicke von über 105 bis 115 nm;
ein $TiO_2$-Gehalt von 80 - 91 Gew.-% bei einer mittleren $TiO_2$-Schichtdicke von über 115 bis 125 nm;
ein $TiO_2$-Gehalt von 81,5 - 92 Gew.-% bei einer mittleren $TiO_2$-Schichtdicke von über 125 bis 135 nm;
ein $TiO_2$-Gehalt von 83 - 92,5 Gew.-% bei einer mittleren $TiO_2$-Schichtdicke von über 135 bis 145 nm;
ein $TiO_2$-Gehalt von 84 - 93 Gew.-% bei einer mittleren $TiO_2$-Schichtdicke von über 145 bis 155 nm;
ein $TiO_2$-Gehalt von 85 - 93 Gew.-% bei einer mittleren $TiO_2$-Schichtdicke von über 155 bis 165 nm;
ein $TiO_2$-Gehalt von 86 - 93,5 Gew.-% bei einer mittleren $TiO_2$-Schichtdicke von über 165 bis 175 nm;
ein $TiO_2$-Gehalt von 87 - 94 Gew.-% bei einer mittleren $TiO_2$-Schichtdicke von über 175 bis 185 nm;
ein $TiO_2$-Gehalt von 87,5 - 94 Gew.-% bei einer mittleren $TiO_2$-Schichtdicke von über 185 bis 195 nm;
ein $TiO_2$-Gehalt von 88 - 94,5 Gew.-% bei einer mittleren $TiO_2$-Schichtdicke von über 195 bis 205 nm;
ein $TiO_2$-Gehalt von 89 - 95 Gew.-% bei einer mittleren $TiO_2$-Schichtdicke von über 205 bis 215 nm.

Ganz besonders bevorzugt besteht folgender Zusammenhang zwischen $TiO_2$-Gehalt in Gew.-%, bezogen auf das Gesamtgewicht von $TiO_2$ und Glimmer, und der mittleren Schichtdicke der $TiO_2$-Beschichtung:

ein $TiO_2$-Gehalt von 35 - 62 Gew.-% bei einer mittleren $TiO_2$-Schichtdicke von über 20 bis 35 nm;
ein $TiO_2$-Gehalt von 40 - 74 Gew.-% bei einer mittleren $TiO_2$-Schichtdicke von über 35 bis 45 nm;
ein $TiO_2$-Gehalt von 45 - 78 Gew.-% bei einer mittleren $TiO_2$-Schichtdicke von über 45 bis 55 nm;
ein $TiO_2$-Gehalt von 50 - 82 Gew.-% bei einer mittleren $TiO_2$-Schichtdicke von über 55 bis 65 nm;
ein $TiO_2$-Gehalt von 55 - 85 Gew.-% bei einer mittleren $TiO_2$-Schichtdicke von über 65 bis 75 nm;
ein $TiO_2$-Gehalt von 60 - 86,5 Gew.-% bei einer mittleren $TiO_2$-Schichtdicke von über 75 bis 85 nm;
ein $TiO_2$-Gehalt von 65 - 88 Gew.-% bei einer mittleren $TiO_2$-Schichtdicke von über 85 bis 95 nm;
ein $TiO_2$-Gehalt von 67 - 89 Gew.-% bei einer mittleren $TiO_2$-Schichtdicke von über 95 bis 105 nm;
ein $TiO_2$-Gehalt von 68 - 90 Gew.-% bei einer mittleren $TiO_2$-Schichtdicke von über 105 bis 115 nm;
ein $TiO_2$-Gehalt von 69 - 91 Gew.-% bei einer mittleren $TiO_2$-Schichtdicke von über 115 bis 125 nm;
ein $TiO_2$-Gehalt von 70 - 92 Gew.-% bei einer mittleren $TiO_2$-Schichtdicke von über 125 bis 135 nm;
ein $TiO_2$-Gehalt von 71 - 92,5 Gew.-% bei einer mittleren $TiO_2$-Schichtdicke von über 135 bis 145 nm.

Insbesondere bevorzugt besteht folgender Zusammenhang zwischen dem $TiO_2$-Gehalt in Gew.-%, bezogen auf das Gesamtgewicht von $TiO_2$ und Glimmer, und der mittleren Schichtdicke der $TiO_2$-Beschichtung:

ein $TiO_2$-Gehalt von 47,5 - 62 Gew.-% bei einer mittleren $TiO_2$-Schichtdicke von über 20 bis 35 nm;
ein $TiO_2$-Gehalt von 58 - 74 Gew.-% bei einer mittleren $TiO_2$-Schichtdicke von über 35 bis 45 nm;
ein $TiO_2$-Gehalt von 63 - 78 Gew.-% bei einer mittleren $TiO_2$-Schichtdicke von über 45 bis 55 nm;
ein $TiO_2$-Gehalt von 67 - 82 Gew.-% bei einer mittleren $TiO_2$-Schichtdicke von über 55 bis 65 nm;
ein $TiO_2$-Gehalt von 70 - 85 Gew.-% bei einer mittleren $TiO_2$-Schichtdicke von über 65 bis 75 nm;
ein $TiO_2$-Gehalt von 73,5 - 86,5 Gew.-% bei einer mittleren $TiO_2$-Schichtdicke von über 75 bis 85 nm;
ein $TiO_2$-Gehalt von 75 - 88 Gew.-% bei einer mittleren $TiO_2$-Schichtdicke von über 85 bis 95 nm;
ein $TiO_2$-Gehalt von 76,5 - 89 Gew.-% bei einer mittleren $TiO_2$-Schichtdicke von über 95 bis 105 nm;
ein $TiO_2$-Gehalt von 78,5 - 90 Gew.-% bei einer mittleren $TiO_2$-Schichtdicke von über 105 bis 115 nm;
ein $TiO_2$-Gehalt von 80 - 91 Gew.-% bei einer mittleren $TiO_2$-Schichtdicke von über 115 bis 125 nm;
ein $TiO_2$-Gehalt von 81,5 - 92 Gew.-% bei einer mittleren $TiO_2$-Schichtdicke von über 125 bis 135 nm;
ein $TiO_2$-Gehalt von 83 - 92,5 Gew.-% bei einer mittleren $TiO_2$-Schichtdicke von über 135 bis 145 nm.

In einer weiteren bevorzugten Ausführungsform besteht vorzugsweise folgender Zusammenhang zwischen dem $Fe_2O_3$-Gehalt in Gew.-%, bezogen auf das Gesamtgewicht von $Fe_2O_3$ und Glimmer, und der mittleren Schichtdicke der $Fe_2O_3$-Beschichtung:

ein $Fe_2O_3$-Gehalt von 47,5 - 72,4 Gew.-% bei einer mittleren $Fe_2O_3$-Schichtdicke von über 35 bis 45 nm;
ein $Fe_2O_3$-Gehalt von 57,5 - 82,4 Gew.-% bei einer mittleren $Fe_2O_3$-Schichtdicke von über 45 bis 55 nm;
ein $Fe_2O_3$-Gehalt von 62,5 - 87,4 Gew.-% bei einer mittleren $Fe_2O_3$-Schichtdicke von über 55 bis 65 nm;

Die in der erfindungsgemäßen Drucktinte, vorzugsweise Tintenstrahltinte, enthaltenen Perlglanzpigmente zeichnen sich strukturell durch einen sehr hohen Metalloxidgehalt, wie z.B. einen sehr hohen $TiO_2$- und/ oder $Fe_2O_3$-Gehalt pro Perlglanzpigment aus.

Das erfindungsgemäße Verfahren zur Herstellung der erfindungsgemäßen Drucktinte, vorzugsweise Tintenstrahltinte, umfasst folgende Schritte:

(a1) Klassieren von weitgehend transparenten plättchenförmigen Substraten

(b1) Beschichten des in Schritt (a1) klassierten Substrates mit einer einzigen optisch wirksamen, vorzugsweise hochbrechenden, Schicht unter Erhalt eines Perlglanzpigmentes mit einem $d_{90}$-Wert der Summenhäufigkeitsverteilung der volumengemittelten Größenverteilungsfunktion aus einem Bereich von 3,5 bis 15 $\mu$m,

oder

(a2) Beschichten von weitgehend transparenten plättchenförmigen Substraten mit einer einzigen optisch wirksamen, vorzugsweise hochbrechenden Schicht,

(b2) Klassieren des in Schritt (a2) erhaltenen Perlglanzpigments unter Erhalt eines Perlglanzpigmentes mit einem $d_{90}$-Wert der Summenhäufigkeitsverteilung der volumengemittelten Größenverteilungsfunktion aus einem Bereich von 3,5 bis 15 $\mu$m),

und anschließend

(c) Mischen der erhaltenen Perlglanzpigmente mit weiteren Bestandteilen der Drucktinte, insbesondere Tintenstrahltinte wie mindestens einem Lösemittel und/ oder mindestens einer strahlungshärtbaren Komponente und/ oder mindestens einem Bindemittel.

Vorzugsweise wird das Substrat zunächst klassiert, anschließend mit einer optisch wirksamen Schicht beschichtet und das erhaltene Perlglanzpigment sodann mit weiteren Bestandteilen zur Herstellung der Drucktinte, vorzugsweise Tintenstrahltinte, gemischt.

Das Klassieren des weitgehend transparenten, vorzugsweise transparenten, Substrates der Perlglanzpigmente kann dabei mittels verschiedener Methoden wie Sedimentation im Schwerefeld, Sedimentation im Dekanter, Sieben, Verwendung eines Zyklons oder Hydrozyklons, Spiralklassifikation oder einer Kombination von zwei oder mehreren dieser Methoden erfolgen. Dabei kann eine Methode wie z.B. Sieben auch in mehreren aufeinanderfolgenden Schritten verwendet werden.

Die Bestimmung der mittleren Schichtdicken und deren Verteilung bzw. Standardabweichung eines Substrates kann - wie im Stand der Technik bekannt - mit Hilfe von REM-Messungen erfolgen. Dazu werden die Substrate oder Perlglanzpigmente in einen Lack einbracht, beispielsweise durch Spritzung oder Rakelabzug, auf einen Untergrund, beispielsweise Blech oder Pappe, aufgebracht und ausgehärtet. Anschließend wird ein Querschliff am ausgehärteten Lack durchgeführt und dieser Querschliff wird im REM untersucht und die Pigmentteilchen werden vermessen. Um statistisch gesicherte Werte zu erhalten, sollten mindestens 100 Pigmentteilchen gezählt werden. Im Rahmen dieser Erfindung kann die Bestimmung der Schichtdicke des Substrates und der optisch wirksamen Schicht in Form einer Metalloxidbeschichtung durch diese Methode erfolgen.

Bei dieser Methode ist darauf zu achten, dass die Perlglanzpigmente weitgehend planparallel orientiert sind. Hierunter versteht man, dass etwa 90 % der Perlglanzpigmente nicht mehr als $\pm$ 15° und bevorzugt nicht mehr als $\pm$ 10° von der mittleren Orientierung abweichen.

Bei einer schlechten Orientierung der Perlglanzpigmente im Lackfilm erhält man einen signifikanten Messfehler. Dieser ist einerseits dadurch bedingt, dass die Perlglanzpigmente im Querschliff um einen azimuthalen Winkel $\alpha$ zum Beobachter gekippt sind. Anderseits erhält man aufgrund des umgebenden Bindemittelmediums keine Tiefenschärfe der Abbildung, so dass dieser Winkel nicht abschätzbar ist. Mithin "sieht" man ein Bild der Schichtdicke, das um den Faktor $1/\cos\alpha$ vergrößert ist. Dieser Faktor verursacht bei größeren Winkeln einen signifikanten Fehler. In Abhängigkeit von der Größe des Winkels $\alpha$ können die mit dieser Methode bestimmten Schichtdicken daher zu hoch sein.

Vorzugsweise wird im Rahmen dieser Erfindung die mittlere Substratschichtdicke $h_S$ der Perlglanzpigmente gemäß nachfolgend beschriebenem Verfahren bestimmt, um zu exakteren Ergebnissen zu kommen. Bei dem erfindungsgemäßen Verfahren wird die mittlere Substratdicke aus dem Zusammenhang zwischen Metalloxidgehalt und der Schichtdicke des Metalloxides bestimmt. Feinere und, wie im Folgenden gezeigt wird, vor allem dünnere Substrate besitzen höhere spezifische Oberflächen. Wenn diese dünneren Substrate mit einem Material beschichtet werden, so müssen sie, damit die Beschichtung eine bestimmte Schichtdicke erreicht, mit mehr Material als dickere Substrate (pro Gewichtseinheit) beschichtet werden. Dies äußert sich in einem höheren spezifischen Gehalt des Beschichtungsmaterials am Gesamtperlglanzpigment, d.h. einem höheren Gehalt an Beschichtungsmaterial, bezogen auf das Gewicht an eingesetztem Substrat.

Dem Verfahren zur Bestimmung der mittleren Substratschichtdicke $h_S$ der Perlglanzpigmente liegt folgendes Modell zugrunde:

a) die Pigmente bestehen aus Zylindern (Plättchen) mit einem einheitlichen Radius $r_S$ und einer einheitlichen Höhe $h_S$. Es wird folglich von vornherein mit "Mittelwerten" gerechnet.
b) Die Wahrscheinlichkeit, dass sich die Beschichtungsmoleküle auf dem Substrat abscheiden, ist überall gleich hoch. Mithin besteht kein Unterschied beispielsweise zwischen Rand oder Deckfläche der Plättchenschichtdicke. Als Folge dieser Annahme bildet sich überall eine einheitliche Schichtdicke $d_M$ der Beschichtung aus. Der Index M steht hier für optische wirksame Beschichtung in Form von Metalloxid. Die einheitliche Beschichtungsdicke wird bei REM-Untersuchungen an vielen beschichteten plättchenförmigen Effektpigmenten tatsächlich beobachtet.
c) Nebenfällungen von M werden vernachlässigt, d.h. alles Material von M wird als Beschichtung auf dem Substrat aufgebracht.

Der Gehalt an der Beschichtung M wird folgendermaßen definiert:

$$c_M = 100 * \frac{m_M}{m_M + m_S} \qquad \text{(Gl. 1)}$$

Dabei ist $m_M$ die Masse der Beschichtung und $m_S$ die Masse des Substrates. Diese lassen sich auch über die Dichten und Volumina ausdrücken:

$$c_M = 100 * \frac{\rho_M \cdot V_M}{\rho_M \cdot V_M + \rho_S \cdot V_S} \qquad \text{(Gl. 2)}$$

Hierbei sind $\rho_S$ und $\rho_M$ die Dichten des Substrates und der Beschichtung. Für das Volumen des Substrates gilt folgende einfache Beziehung (Zylindervolumen):

$$V_S = \pi \, r_S^2 \, h_S \qquad \text{(Gl. 3)}$$

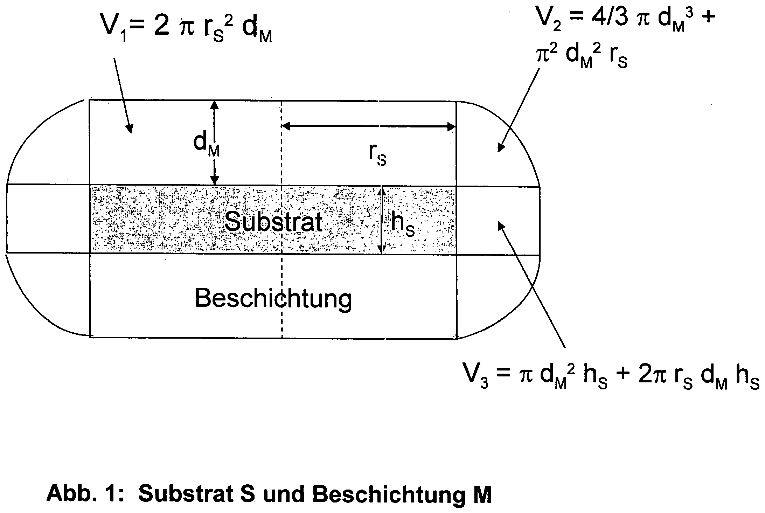

Die Berechnung des Volumens des Beschichtungsmaterials $V_M$ erfolgt nach einem Modell, welches in Abb. 1 skizziert ist.

Das Volumen des abgeschiedenen Metalloxides teilt sich dabei prinzipiell zwischen den Stirnflächen und dem Rand auf und wird in drei Termen dargestellt (s. Abb. 1)

$$V_M = (V_{M,1} + V_{M,2} + V_{M,3}) \qquad \text{(Gl. 4)}$$

$$V_M = \left[ 2\pi \cdot d_M \left( r_S \right)^2 + \left( \frac{4}{3} \pi \cdot d_M^3 + \pi^2 d_M^2 r_S \right) + \left( \pi \cdot d_M^2 h_S + 2\pi \cdot r_S \cdot d_M \cdot h_S \right) \right] \quad \text{(Gl. 5)}$$

Hierbei ist $h_S$ die mittlere Höhe des Substrates, $r_S$ der mittlere Durchmesser des Substrates und $d_M$ die Höhe der Schichtdicke des Metalloxides.

Kombiniert man diese Gleichungen, so erhält man schließlich folgenden Ausdruck:

$$c_M = \frac{100}{1 + \frac{\rho_S}{\rho_M} * \frac{h_S \cdot r_S^2}{\left( \frac{4}{3} d_M^3 + (\pi \cdot r_S + h_S) \cdot d_M^2 + (2r_S^2 + 2r_S h_S) \cdot d_M \right)}} \qquad \text{(Gl. 6)}$$

Löst man diese Gleichung wiederum nach der mittleren Substratdicke $h_S$ auf, so erhält man den folgenden Ausdruck:

$$h_S = \frac{\dfrac{4d_M^3}{3r_S^2} + \dfrac{\pi d_M^2}{r_S} + 2 \cdot d_M}{\dfrac{\rho_S}{\rho_M \cdot (\dfrac{100}{c_M} - 1)} - \left(\dfrac{d_M}{r_S}\right)^2 - 2 \cdot \dfrac{d_M}{r_S}} \qquad \text{(Gl. 7)}$$

Im Rahmen dieser Erfindung wird die mittlere Substratdicke $h_S$ der Perlglanzpigmente bevorzugt über diese Gleichung definiert, wenn die Schichtdicke $d_M$ 40 bis 180 nm ist.
Bei höheren Schichtdicken ist die Formel ungenau, da aufgrund des hohen Gehaltes an dem optisch aktiven Beschichtungsmaterial der Gehalt $c_M$ einem Grenzwert zuläuft. Bei niedrigen Schichtdicken ist ebenfalls keine gute Differenzierung möglich.

Der mittlere Radius des Substrates wird dabei bevorzugt über Laserbeugungsmessungen an den Perlglanzpigmenten bestimmt, vorzugsweise durch Lasergranulometrie mittels Cilas 1064 der Fa. Cilas. Dabei wird der $d_{50}$-Wert der Größensummenverteilungskurve herangezogen; es gilt dann die Beziehung:

$$d_{50}/2 = r_S \qquad \text{(Gl. 8)}$$

Die Größe $c_M$ wird über analytische Messungen bestimmt. Hierbei wird bevorzugt eine RFA-Analyse (Röntgenfluoreszenzanalyse) anhand von fein verteiltem Pigmentmaterial durchgeführt. Das Pigmentpulver wird gegebenenfalls zuvor in einer Mühle oder einem Mörser zerkleinert, um ein einheitliches Probenmaterial bereitzustellen. Alternativ kann das Perlglanzpigment auch beispielsweise durch Flußsäure aufgelöst werden und die RFA-Analyse anschließend aus der Lösung vorgenommen werden.

Weiterhin können die analytischen Gehalte an Substrat und optisch aktivem Material auch über ICP (Inductively Coupled Plasma) bestimmt werden.

Für die Dichten werden bevorzugt Literaturwerte (Handbook Chemistry and Physics) verwendet. Übliche Werte sind beispielsweise:

Tabelle 1: Dichten üblicher Materialien von Perlglanzpigmenten

| Material | Dichte | Funktion |
|---|---|---|
| Glimmer | 2,7 | Substrat |
| $Al_2O_3$ | 4,0 | Substrat (überwiegend) |
| $SiO_2$ | 2,2 - 2,7 | Substrat (überwiegend) |
| $TiO_2$ (Rutil) | 4,3 | Beschichtung |
| $TiO_2$ (Anatas) | 3,9 | Beschichtung |
| $Fe_2O_3$ (Hämatit) | 5,2 | Beschichtung |
| $Fe_3O_4$ (Magnetit) | 5,2 | Beschichtung |

Werden Mischschichten aus zwei oder mehreren hochbrechenden Schichten verwendet, so kann man die Dichte der Beschichtung aus den Literaturwerten gewichtet mit den analytisch zugänglichen Gewichtsverhältnissen der einzelnen Materialien berechnen.

Die Schichtdicke des Metalloxides schließlich kann beispielsweise und bevorzugt über die Farbe des Perlglanzpigmentes bestimmt werden. Die grundlegenden physikalischen Formeln der Optik von Perlglanzpigmenten sind in C. Schmidt, M. Fritz "Optical Physics of Synthetic Interference Pigments" Kontakte (Darmstadt) 1992 (2) S. 15 - 24 dargelegt worden.

Ist der Unterschied zwischen der über REM-Querschliffe gemessenen Schichtdicke und der Schichtdicke bestimmt aus der jeweiligen Farbe zu groß, d.h. ist die Abweichung zwischen diesen beiden Werten größer als 10%, so kann zur Berechnung von $h_S$ die über REM-Querschliffe gemessene Schichtdicke herangezogen werden.

Die Farbe kann auch durch ein geeignetes Rechenprogramm wie die Software "Filmstar" der Fa. FTG Software Associates, USA bestimmt werden. Dabei müssen die optischen Konstanten (Brechzahl n und gegebenenfalls Absorptionskonstante k) der optisch wirksamen Schicht im Bereich der optischen Wellenlängen (400 bis 800 nm) verwendet werden. Derartige Werte sind für die gängigen Materialien gut bekannt.

Weiterhin kann die Schichtdicke anhand der Farbe aus den öffentlich zugänglichen Informationen bestimmt werden. Beispielsweise gibt es bei mit $TiO_2$ beschichteten Perlglanzpigmenten auf Basis von Glimmer folgenden bekannten Zusammenhang:

Tabelle 2: Typische Farben und Schichtdicken von Perlglanzpigmenten

|  | Belegung/ Schichtdicke | Farbe |
|---|---|---|
| Silberweiße Perlglanzpigmente Interferenzpigmente | $TiO_2$: 40 - 60 nm | silber |
|  | $TiO_2$: 60 - 80 nm | gelb |
|  | $TiO_2$: 80 - 100 nm | rot |
|  | $TiO_2$: 100 - 140 nm | blau |
|  | $TiO_2$: 120 - 160 nm | grün |
|  | $TiO_2$: 280 - 320 nm | grün (III. Ordnung) |
| Farbglanzpigmente | $Fe_2O_3$: 35 - 45 nm | bronze |
|  | $Fe_2O_3$: 45 - 55 nm | kupfer |
|  | $Fe_2O_3$: 55 - 65 nm | rot |
|  | $Fe_2O_3$: 65 - 75 nm | rotviolett |
|  | $Fe_2O_3$: 75 - 85 nm | rotgrün |

In den meisten Fällen wird die Farbe fast ausschließlich durch die Schichtdicke der hochbrechenden Beschichtung bestimmt (F. Hofmeister, Farbe + Lack **95**, 557 (1989)).

Insbesondere bei Perlglanzpigmenten mit einer großen Standardabweichung der Substratdickenverteilung hängt die Farbgebung weitgehend nicht von der mittleren Dicke des Substrates ab, sondern ist weitgehend durch die Schichtdicke der hochbrechenden Schicht bestimmt.

Sollte das Substrat mit seiner Schichtdicke ebenfalls in nicht vernachlässigbarer Weise die Interferenzfarbe bestimmen, so muss eine genauere optische Rechnung herangezogen werden. Dabei lässt sich die Schichtdicke des Substrates wie auch der optisch aktiven Schicht, vorzugsweise der hochbrechenden Metalloxidschicht z.B. anhand der Lagen des Maxima und/ oder Minima des Remissionsspektrums der Perlglanzpigmente bestimmen.

Sollte das Perlglanzpigment eine Mischbeschichtung von zwei oder mehreren hochbrechenden Oxiden aufweisen, so sind die optischen Konstanten analog zur Dichteberechnung aus einer Gewichtung aus den analytisch zugänglichen Gewichtsverhältnissen der einzelnen hochbrechenden Oxide zu berechnen.

Weist das Perlglanzpigment dagegen eine Kombination zweier hochbrechender Oxide auf, so lässt sich das Modell dennoch verwenden. Bei der ersten Beschichtung mit hochbrechendem Metalloxid kann Gleichung (7) direkt verwendet werden. Bei der Berechnung des zweiten hochbrechenden Oxides ist jedoch die Schichtdicke des ersten Oxides zu berücksichtigen.

Weiterhin kann die Schichtdicke der optischen wirksamen Schicht, bevorzugt der hochbrechenden Metalloxidschicht auch durch die REM-Auszählung an gut orientierten Querschliffen der Perlglanzpigmente bestimmt werden.

Eine weitere Methode zur Bestimmung der mittleren Substratschichtdicke besteht darin, die Dicken der (beschichteten) Perlglanzpigmente gemäß der in der WO 2004/087816 A2 beschrieben Methode zu präparieren und ebenfalls im REM zu vermessen. Dabei sollten mindestens 100 Pigmentteilchen vermessen werden, um eine aussagefähige Statistik zu erhalten. Anschließend ermittelt man den arithmetischen Mittelwert. Dieser stellt die mittlere Dicke des Perlglanzpigmentes $d_{tot}$ dar und es gilt natürlicherweise:

$$d_{tot} = 2\,d_M + h_S \qquad\qquad (Gl.\ 9)$$

Man kann ausgehend von Gleichung (7) mittels Gleichung (9) $d_M$ eliminieren und dann nach $h_S$ auflösen. Dabei kann man in guter Näherung die höheren Terme von $h_S$ vernachlässigen und so $h_S$ aus dem Zusammenhang des Gehaltes der optisch aktiven Schicht $c_M$ und der mittleren Pigmentgesamtschichtdicke $d_{tot}$ ermitteln.

Die auf Gleichung (7) basierenden Verfahren zur Bestimmung der mittleren Substratschichtdicke kann auch allgemein auf plättchenförmige Effektpigmente verwendet werden. Diese besitzen ein plättchenförmiges Substrat sowie eine Beschichtung. Das plättchenförmige Substrat umfasst dabei auch Metallpigmente.

Bei weiteren erfindungsgemäßen Ausführungsformen weisen die Perlglanzpigmente mindestens eine weitere niedrigbrechende Schicht auf. Diese Schicht kann zwischen Substrat und hochbrechender Schicht oder auf der hochbrechenden Schicht angebracht sein. Im Fall von natürlichem oder synthetischem Glimmer lässt sich eine derartige Schicht analytisch gut unterscheiden. Glimmer weist charakteristische Verunreinigungen auf, wenngleich sein Hauptbestandteil Silikat ist. Anhand dieser Verunreinigungen kann man beispielsweise eine $SiO_2$-Beschichtung vom Glimmer unterscheiden und Gleichung (7) entsprechend anwenden. Der Schichtaufbau ist auch beispielsweise anhand von Querschliffen und/ oder durch ESCA (Electron Spectroscopy for Chemical Analysis) in Verbindung mit Sputterprofilen analysierbar.

Die eingesetzte Menge an Perlglanzpigment in der Drucktinte, vorzugsweise Tintenstrahltinte, gemäß der vorliegenden Erfindung liegt vorzugsweise im Bereich von 0,1 bis 30 Gew.-%, weiterhin bevorzugt im Bereich von 0,2 bis 20 Gew.-%, weiter bevorzugt im Bereich von 0,3 bis 10 Gew.-%, besonders bevorzugt im Bereich von 0,5 bis 7 Gew.-% und ganz besonders bevorzugt im Bereich von 1 bis 5 Gew.-% bezogen auf das Gesamtgewicht der Drucktinte, insbesondere Tintenstrahltinte.

Der entscheidende Faktor für die Verdruckbarkeit von Perlglanzpigmenten in Tintenstrahldruckköpfen ist die Teilchengröße. Es konnte eine kritische Obergrenze in der Teilchengrößenverteilung von Perlglanzpigmenten für die Anwendung in typischen industriellen Tintenstrahldruckköpfen, beispielsweise XAAR 1001, Xaar XJ126/80 oder Spectra Nova 256, ermittelt werden. Die in der erfindungsgemäßen Drucktinte, insbesondere Tintenstrahltinte, verwendeten Perlglanzpigmente besitzen $d_{90}$-Werte unter 15 $\mu$m, bevorzugt unter 13 $\mu$m, weiter bevorzugt unter 12 $\mu$m, besonders bevorzugt unter 10 $\mu$m und ganz besonders bevorzugt unter 8 $\mu$m.

Um eine Auflösung von 300 dpi oder besser zu erreichen, spielen neben der Feinheit des eingesetzten Perlglanzpigments verschiedene weitere Faktoren eine Rolle, wie die Düsengröße des Tintenstrahldruckkopfs, Durchmesser interner Kanäle oder das Vorhandensein von Filtern im Tintenstrahldruckkopf. Diese konstruktionsbedingten Eigenschaften des Tintenstrahldruckkopfs können eine Ansammlung von Perlglanzpigmenten oder Verstopfung durch Perlglanzpigmente an unterschiedlichen Stellen des Tintenstrahldruckkopfs bewirken, was schließlich zu einer Verschlechterung des Druckbildes führen kann bzw. die eingesetzte Drucktinte, vorzugsweise Tintenstrahltinte, kann nicht mehr verdruckt werden.

Feinere Perlglanzpigmente zeigen ein langsameres Absetzverhalten als gröbere Perlglanzpigmente. Auch konstruktionsbedingte Engstellen des Tintenstrahldruckkopfs, wie dünne Kanäle, werden durch feinere Pigmente nicht oder weitgehend nicht blockiert.

Um Ablagerungen bzw. Verstopfungen mit Perlglanzpigmenten zu verhindern, kann die Drucktinte, vorzugsweise Tintenstrahltinte, die Perlglanzpigmente enthält, im verwendeten Tintenstrahlsystem kontinuierlich in Bewegung gehalten werden. Ein Absetzen der Perlglanzpigmente in der Drucktinte, vorzugsweise Tintenstrahltinte, kann so weitgehend, bevorzugt ganz, verhindert werden.

Die erfindungsgemäße Drucktinte, vorzugsweise Tintenstrahltinte, enthält neben Perlglanzpigmenten mindestens ein Lösemittel und/ oder mindestens eine strahlungshärtbare Komponente und/ oder mindestens ein Bindemittel und optional ein Additiv oder mehrere Additive.

Bevorzugt umfasst die lösemittel- und/ oder wasserbasierte Drucktinte, vorzugsweise Tintenstrahltinte, einen Lösemittelanteil zwischen 10 und 95 Gew.-%, bevorzugt zwischen 20 und 94 Gew.-% und besonders bevorzugt zwischen 50 und 93 Gew.-% bezogen auf das Gesamtgewicht der Drucktinte, vorzugsweise Tintenstrahltinte.

Vorzugsweise liegt die Verdunstungszahl des Lösemittels in einem Bereich zwischen 10 und 300, bevorzugt zwischen 20 und 250, weiter bevorzugt zwischen 80 und 200. Die Verdunstungszahl ist definiert nach DIN 53170 relativ zu Ether bei 20°C.

Als Lösemittel oder Lösemittelgemisch kann jedes zum Drucken, insbesondere Tintenstrahldruck, geeignete Lösemittel eingesetzt werden. Bevorzugte Lösemittel sind Wasser, Alkohole, Ester, Ether, Thioether, Glykolether, Glykoletheracetate, Amine, Amide, Ketone und/ oder Kohlenwasserstoffe oder Mischungen hiervon.

Beispiele für Alkohole sind Alkylalkohole wie z.B. Methanol, Ethanol, Propanol, Isopropanol, Butanol, Pentanol, Hexanol, fluorierte Alkohole oder Mischungen hiervon.

Beispiele für Ketone als Lösemittel sind Aceton, Methylethylketon, Cyclohexanon, Diisobutylketon, Methylpropylketon, Diacetonalkohol oder Mischungen hiervon.

Beispiele für Ester sind Methylacetat, Ethylacetat, 1-Methoxy-2-propylacetat, Propylacetat, Ethoxypropylacetat, Butylacetat, Methylpropionat oder Ethylpropionat, Glykoletheracetate, Butylglykolacetat, Propylenglykoldiacetat, Ethyllactat oder Mischungen hiervon.

Beispiele für Ether als Lösemittel sind Diethylether, Dipropylether, Tetrahydrofuran, Dioxanethylenglykolether, insbesondere Ethylenglykolethylether oder Ethylenglykolmethylether, Methoxypropanol, Dipropylenglykoldimethylether, 3-Methoxy-3-methyl-1-butanol, Propylenglykolbutylether oder Mischungen hiervon.

Beispiele für Amide als Lösemittel sind *N*-Methylpyrrolidon und 2-Pyrrolidon.

Die Kohlenwasserstoffe können aus der Gruppe ausgewählt werden, die aus Terpenen, wie Pinen, Limonen, Terpinolen, aliphatischen Kohlenwasserstoffen wie Heptan, Testbenzin, "Stoddard Solvent" und/ oder aromatischen Kohlenwasserstoffen wie Toluol, Xylol, Solvent Naphta oder Mischungen hiervon, besteht.

Insbesondere werden geeignete Lösemittel aus der Gruppe bestehend aus Alkoholen, Glykolethern, Estern, Ketonen oder Mischungen hiervon ausgewählt. Unter Lösemittel wird im Sinne der Erfindung ein einzelnes Lösemittel oder ein Lösemittelgemisch verstanden.

Besonders bevorzugte Lösemittel sind Isopropanol, Ethanol, Butanol, Diisobutylketon, Butylglykol, Butylglykolacetat Propylenglykoldiacetat, Dipropylenglykoldimethylether, Ethyllactat oder Ethoxypropylacetat.

Bei einer weiteren Ausführungsform ist es bevorzugt, dass das Lösungsmittel bzw. Lösungsmittelgemisch in Tintenstrahltinten, die in der "drop-on-demand" (DOD) Technologie eingesetzt werden, einen Flammpunkt von mindestens 61°C oder darüber besitzen. Somit wird gewährleistet, dass die Druckmaschinen nicht in einem explosionsgeschützten Bereich stehen oder explosionsgeschützt ausgeführt sein müssen. Weiterhin ist die Lagerung und der Transport einer derartigen Drucktinte, vorzugsweise Tintenstrahltinte, sicherer.

Bei einer weiteren Ausführungsform handelt es sich bei der Drucktinte, vorzugsweise Tintenstrahltinte, um eine strahlungshärtbare Tinte, insbesondere um eine mittels UV-Licht härtbare Tinte, im folgenden UV-härtbare Tinte, die 0 bis 50 Gew.-% Lösemittel, bezogen auf das Gesamtgewicht der Drucktinte, vorzugsweise Tintenstrahltinte, enthält. Da in UV-härtbaren Tinten normalerweise kein Lösemittel notwendig ist, liegt der Lösemittelanteil bevorzugt bei 0 bis 10 Gew.-%, bezogen auf das Gesamtgewicht der Drucktinte, vorzugsweise Tintenstrahltinte. Bei einer besonders bevorzugten Ausführungsform enthält die UV-härtbare Tintenstrahltinte kein Lösemittel.

Bei einer weiteren Ausführungsform der Erfindung hat die Drucktinte, vorzugsweise Tintenstrahltinte, eine Oberflächenspannung von 20 bis 50 mN/m. Liegt die Oberflächenspannung unter 20 mN/m fließt die Drucktinte, vorzugsweise Tintenstrahltinte, über die Oberfläche des Druckkopfes, was zu Schwierigkeiten beim Ausstoß der Tintentröpfchen führt. Außerdem verläuft die Tinte auf dem zu bedruckenden Substrat, was sich in einem schlechten Druckbild äußert. Liegt die Oberflächenspannung über 50 mN/m, kann das zu bedruckende Substrat nicht benetzt werden, die Tinte verläuft nicht auf dem zu bedruckenden Substrat.

Bei einer weiteren Ausführungsform für strahlungshärtbare Drucktinte, vorzugsweise Tintenstrahltinte, besonders für UV-härtbare Tintenstrahltinten, wirkt die strahlungshärtbare Komponente gleichzeitig als Bindemittel. Die Menge an eingesetzter strahlungshärtbarer Komponente, z.B. flüssige Oligomere und Monomere liegt in einem Bereich zwischen 1 und 99 Gew.-%, bevorzugt in einem Bereich zwischen 30 und 80 Gew.-% und besonders bevorzugt in einem Bereich zwischen 40 und 75 Gew.-% bezogen auf das Gesamtgewicht der Drucktinte, vorzugsweise Tintenstrahltinte.

Demnach kann gemäß einer Ausführungsform der Erfindung die strahlungshärtbare Komponente mithin ein Bindemittel sein.

Die strahlungshärtbare Tintenstrahltinte enthält neben der strahlungshärtbaren Komponente vorzugsweise Photoinitiatoren. Diese können in einer strahlungshärtbaren Komponente gelöst oder als Feststoff vorliegen.

Gemäß einer weiteren Ausführungsform der vorliegenden Erfindung umfasst die Drucktinte, vorzugsweise Tintenstrahltinte, ein Bindemittel in einem Bereich zwischen 0,1 und 99 Gew.-%, bezogen auf das Gesamtgewicht der Drucktinte, vorzugsweise Tintenstrahltinte. Vorzugsweise handelt es sich bei den Drucktinten, vorzugsweise Tintenstrahltinten um lösemittelbasierte Systeme.

Abhängig von dem zu bedruckenden Substrat wird der Drucktinte, vorzugsweise Tintenstrahltinte, ein oder kein Bindemittel zugegeben. Falls das Bindemittel bereits im zu bedruckenden Substrat vorliegt, wie beispielsweise in speziellem Tintenstrahldruckpapier, ist die Zugabe eines Bindemittels zur Drucktinte, vorzugsweise Tintenstrahltinte, nicht notwendig.

Bei einer weiteren bevorzugten Ausführungsform der vorliegenden Erfindung basiert die Drucktinte, bevorzugt Tintenstrahltinte, auf Lösemittel(n) und/ oder Wasser und umfasst ein Bindemittel in einem Bereich von 0,1 bis 50 Gew.-%, bevorzugt in einem Bereich von 1 bis 35 Gew.-% und besonders bevorzugt in einem Bereich von 2 bis 25 Gew.-% und ganz besonders bevorzugt in einem Bereich von 0,2 bis 15 Gew.-%, jeweils bezogen auf das Gesamtgewicht der Drucktinte, bevorzugt Tintenstrahltinte.

Als Bindemittel kommen alle Bindemittel in Betracht, die gewöhnlich in Drucktinten, insbesondere Tintenstrahltinten, eingesetzt werden können. Bevorzugt sind, ohne hierauf einschränken zu wollen, folgende Bindemittel: UV-härtbare Acrylmonomere und -oligomere, verschiedene Harze wie Kohlenwasserstoffharze, modifizierte Kolophoniumharze, Polyethylenglykolharze, Polyamidharze, Polyvinylbutyralharze, Polyvinylpyrrolidonharze, Polyesterharze, Polyurethanharze, Polyacrylharze, Polyacrylamidharze, Polyvinylchloridharze, Ketonharze, Phenolharze, Polyvinylalkoholharze, modifizierte Cellulose- oder modifizierte Nylonharze oder andere in organischen Lösemitteln und/ oder Wasser lösliche oder feinteilig dispergierbare Harze oder Mischungen davon.

Bei einer weiteren Ausführungsform kann die erfindungsgemäße Drucktinte, vorzugsweise Tintenstrahltinte, nicht in flüssiger, sondern in fester Form, wie beispielsweise als Wachsklötzchen, vorliegen und erst im Tintensystem geschmolzen werden. Unter Tintensystem wird die gesamte Versorgung des Druckers, wie Vorratsbehälter, Schläuche, Kanäle oder Ventile verstanden. Derartige schmelzbare Drucktinten, vorzugsweise Tintenstrahltinten, werden auch als "phase change"-Tinte bezeichnet. Bei Verwendung derartiger Wachsklötzchen wird der Vorratsbehälter beheizt und die Tinte dann über beheizte Schläuche etc. dem Druckkopf zugeführt.

Vorzugsweise umfasst die Drucktinte, bevorzugt Tintenstrahltinte, zusätzliche Additive, wie z.B. Dispergiermittel, Antiabsetzmittel, Feuchthaltemittel, Netzmittel einschließlich Antikrater- oder Verlaufsadditive, Biozide, pH-Einstellmittel, Weichmacher, UV-Schutzmittel oder Mischungen davon.

Die Dispergiermittel helfen eine homogene Verteilung aller festen Bestandteile in der Tintenstrahltinte zu erzielen. Insbesondere wird eine mögliche Agglomeration der Perlglanzpigmente vermieden.

Die erfindungsgemäße Zusammensetzung der Drucktinte, bevorzugt Tintenstrahltinte, kann ein Dispergiermittel enthalten. Als Dispergiermittel können alle gängigen Dispergiermittel verwendet werden, welche in einer gewöhnlichen Drucktinte, insbesondere Tintenzusammensetzung, wie einer Tiefdrucktinte, Offsettinte, Intagliotinte oder Siebdrucktinte benutzt wird. Als Dispersionsmittel können handelsübliche Produkte verwendet werden. Beispiele hierfür umfassen Solsperse 20000, 24000, 3000, 32000, 32500, 33500, 34000 und 35200 (Fa. Avecia K.K.) oder Disperbyk-102, 106, 111, 161, 162, 163, 164, 166, 180, 190, 191 und 192 (Fa. BYK-Chemie GmbH).

Bei einer weiteren Ausführungsform enthalten die Drucktinten, vorzugsweise Tintenstrahltinten, der vorliegenden Erfindung Antiabsetzmittel. Diese Substanzen sollen das Absetzen der plättchenförmigen Perlglanzpigmente in der Drucktinte, vorzugsweise Tintenstrahltinte, verhindern. Beispiele hierfür sind Byk-405 in Verbindung mit pyrogenem Siliziumdioxid, modifizierten Harnstoffen wie Byk-410 und Byk-411 oder Wachsen wie Byk Ceramat 237, Ceramat 250, Cerafak 103, Cerafak 106 oder Ceratix 8461.

Die Feuchthaltemittel werden in wasserbasierenden Drucktinten, insbesondere Tintenstrahltinten, benutzt, um jedwede Austrocknung zu vermeiden, besonders während sich die Tinte im Druckkopf befindet. Die Feuchthaltemittel verringern die Verdampfungsrate und verhindern die Ablagerung von Feststoffen, wenn die Verdampfung an der Tintenstrahldüse auftritt. Vorzugsweise werden die Feuchthaltemittel aus der Gruppe ausgewählt, die aus Polyolen, wie Glykolen, Glyzerin, Sorbitolen, Polyvinylalkoholen, Glykolethern und Mischungen davon besteht.

Netzmittel dienen dazu die Benetzung des zu bedruckenden Substrats zu verbessern. Netzmittel sind weiterhin wichtig für die Funktion des Druckkopfs, da auch interne Strukturen, wie beispielsweise Kanäle, Filter, Düsenvorkammern etc. benetzt werden. Beispiele geeigneter Netzmittel umfassen Fettsäurealkylether, Acetylenderivate, fluorierte Ester, fluorierte Polymere.

Biozide können in Drucktinten, insbesondere Tintenstrahltinten, eingearbeitet werden, um ein Wachstum von Mikroorganismen zu verhindern. Verwendet werden können z.B. Polyhexamethylenbiguanide, Isothiazolone, Isothiazolinone, wie z.B. 5-Chloro-2-methyl-4-isothiazolin-3-on (CIT), 2-Methyl-4-isothiazolin-3-on (MIT), etc. oder Mischungen davon.

Ammoniak oder Amine wie Triethanolamin oder Dimethylethanolamin können der Drucktinte, insbesondere Tintenstrahltinte, zur Einstellung des pH-Wertes zugeben werden.

Als Weichmacher können beispielsweise Zitronensäureester, Adipinsäureester, Phosphorsäureester und höhere Alkohole der Drucktinte, insbesondere Tintenstrahltinte, zugesetzt werden.

Beispielsweise kann 2,6-Di-tert-Butylphenol als UV-Schutzmittel der erfindungsgemäßen Drucktinte, vorzugsweise Tintenstrahltinte, zugegeben werden.

Mit einer Perlglanzpigmente enthaltenden Drucktinte, insbesondere Tintenstrahltinte, kann dem zu bedruckenden Substrat der für Perlglanzpigmente typische Tiefenglanz bei gleichzeitig durchscheinendem Substrat verliehen werden. Ein mit einer Perlglanzpigmente enthaltenden Drucktinte, insbesondere Tintenstrahltinte, bedrucktes Substrat kann, falls erwünscht, weiter überdruckt werden. Alternativ kann das zu bedruckende Substrat zunächst mit einer Perlglanzpigmente enthaltenden Drucktinte, insbesondere Tintenstrahltinte, bedruckt und anschließend mit einer oder mehreren Prozessfarben überdruckt werden. Weiterhin ist es möglich eine Perlglanzpigmente enthaltende Drucktinte, insbesondere Tintenstrahltinte, zusammen mit einer oder mehreren Prozessfarben zu drucken. Auch ein Verdrucken der Perlglanzpigmente enthaltenden Drucktinte, insbesondere Tintenstrahltinte, nach, vor oder zusammen mit weiteren Sonderfarben, wie beispielsweise Metalleffektpigmente enthaltende Druckfarben, insbesondere Tintenstrahltinten, ist möglich. Perlglanzpigmente sind im Unterschied zu Metalleffektpigmenten deutlich wasserresistenter und somit weniger reaktiv in wässrigen Drucktinten, insbesondere Tintenstrahltinten.

Zusätzlich zu den Perlglanzpigmenten können verschiedene Farbmittel in die Drucktinte, vorzugsweise Tintenstrahltinte, eingearbeitet werden. Beispielsweise können in der vorliegenden Erfindung verwendet werden: verschiedene schwarze Farbmittel wie C.I. Solvent Blacks 27, 28, 29, 35, 45; C.I. Pigment Black 7; verschiedene blaue Farbmittel wie C.I. Direct Blues 86, 199; C.I. Solvent Blues 25, 44, 48, 67, 70; C.I. Pigment Blue 15:3; verschiedene rote Farbmittel wie C.I. Acid Red 52; C.I. Reactive Red 180; C.I. Solvent Reds 49, 172; C.I. Disperse Red 60; C.I. Pigment Red 122 und/ oder verschiedene gelbe Farbmittel wie C.I. Acid Yellow 23; C.I. Direct Yellow 86; C.I. Direct Yellow 132; C.I. Disperse Yellow 119; C.I. Reactive Yellow 37; C.I. Solvent Yellow 162; C.I. Solvent Yellow 146; C.I. Pigment Yellow 17 oder C.I. Pigment Yellow 86 oder C.I. Pigment Yellow 155.

Weiterhin können neben Perlglanzpigmenten und gegebenenfalls Farbmittel(n) auch Metalleffektpigmente in der Drucktinte, vorzugsweise Tintenstrahltinte, vorhanden sein.

Bei einer weiteren Ausführungsform der Erfindung liegt die Viskosität der Drucktinte, vorzugsweise Tintenstrahltinte, in einem Bereich von 1 bis 100 mPa·s, gemessen mit einem R/S Rheometer der Fa. Brookfield mit einem Doppelspalt-Zylinder Meßsystem nach DIN 54453 mit der Vorgabe von 150 rpm bei 25°C. Vorzugsweise liegt die Viskosität der Drucktinte, insbesondere Tintenstrahltinte, in einem Bereich von 3 bis 30 mPa·s, besonders bevorzugt in einem Bereich von 5 bis 20 mPa·s.

Die lösemittelbasierende Drucktinte, vorzugsweise Tintenstrahltinte, der vorliegenden Erfindung hat vorzugsweise eine Viskosität von 4 bis 20 mPa·s, gemessen mit einem R/S Rheometer der Fa. Brookfield mit einem Doppelspalt-Zylinder Meßsystem nach DIN 54453 mit der Vorgabe von 150 rpm bei 25°C, eine Oberflächenspannung von 20 bis 45 mN/m, gemessen bei einer Temperatur von 25°C mit du Nouy's Ring-Methode, und eine Leitfähigkeit von 0 bis 5 mS/cm, gemessen bei einer Temperatur von 25°C nach oder entsprechend DIN 53779.

Die wasserbasierende Drucktinte, insbesondere Tintenstrahltinte, der vorliegenden Erfindung hat vorzugsweise eine Viskosität von 1 bis 15 mPa·s, gemessen mit einem R/S Rheometer der Fa. Brookfield mit einem Doppelspalt-Zylinder Meßsystem nach DIN 54453 mit der Vorgabe von 150 rpm bei 25°C, eine Oberflächenspannung von 20 bis 80 mN/m, gemessen bei einer Temperatur von 25°C mit du Nouy's Ring-Methode, einen pH-Wert von 6 bis 11 in wasserbasierten Druckfarben und eine Leitfähigkeit von 0 bis 5 mS/cm, gemessen bei einer Temperatur von 25 °C nach oder entsprechend DIN 53779.

Die strahlungshärtbare Drucktinte, insbesondere Tintenstrahltinte, der vorliegenden Erfindung hat vorzugsweise eine Viskosität von 6 bis 20 mPa·s, gemessen mit einem R/S Rheometer der Fa. Brookfield mit einem Doppelspalt-Zylinder Meßsystem nach DIN 54453 mit der Vorgabe von 150 rpm bei 25°C, eine Oberflächenspannung von 20 bis 45 mN/m, gemessen bei einer Temperatur von 25°C mit du Nouy's Ring-Methode, und eine Leitfähigkeit von 0 bis 5 mS/cm, gemessen bei einer Temperatur von 25 °C nach oder entsprechend DIN 53779.

Die Viskosität kann an den verwendeten Druckkopf, an das zu bedruckende Substrat und/ oder an die Zusammensetzung der Drucktinte, insbesondere Tintenstrahltinte, angepasst werden.

Die Drucktinte, insbesondere Tintenstrahltinte, der vorliegenden Erfindung kann auf unterschiedliche zu bedruckende Substrate aufgebracht werden. Vorzugsweise wird das Substrat aus der Gruppe ausgewählt, die aus beschichtetem oder unbeschichtetem Papier oder Pappe, polymeren Substraten (Plastik), Metallen, Keramik, Glas, Textilien, Leder und aus Kombinationen davon besteht. Die am meisten bevorzugten Substrate bestehen aus polymeren Substraten (Plastik), wie Kunststofffolien (z.B. PVC- oder PE-Folien).

Ein wichtiger Aspekt des erfindungsgemäßen Verfahrens zur Herstellung einer Drucktinte, insbesondere Tintenstrahltinte, ist, dass die Perlglanzpigmente beim Mischen mit den übrigen Bestandteilen der Drucktinte, insbesondere Tintenstrahltinte, nicht beschädigt werden.

Beispielsweise können die Bestandteile der Drucktinte, insbesondere Tintenstrahltinte, der vorliegenden Erfindung im Ultraschallbad und anschließend mittels Magnetrührer gemischt werden.

Die Drucktinte, insbesondere Tintenstrahltinte, gemäß der vorliegenden Erfindung kann mit jeder möglichen Tintenstrahl-Technologie benutzt werden. Die erfindungsgemäße Tintenstrahltinte kann in verschiedenen Tintenstrahldrucksystemen eingesetzt werden. Einerseits kann es sich bei den Tintenstrahldrucksystemen um Systeme handeln, bei denen Tropfen elektrostatisch aufgeladen und abgelenkt werden (continuous ink jet-Verfahren). Andererseits können Tintenstrahldrucksysteme verwendet werden, in denen Tropfen durch Druckwellen gebildet werden, die von piezoelektrischen Elementen oder durch sich ausdehnende Dampfblasen erzeugt werden (drop-on-demand-Verfahren).

Vorzugsweise wird die Drucktinte, insbesondere Tintenstrahltinte, der vorliegenden Erfindung mit der continuous ink jet - CIJ - oder impulse oder drop-on-demand - DOD - Tintenstrahltechnologie benutzt.

Eine Auflösung von mindestens 300 dpi wird standardmäßig zur Gewährleistung einer guten Druckqualität vorausgesetzt.

Die in der erfindungsgemäßen Drucktinte, insbesondere Tintenstrahltinte, enthaltenen Perlglanzpigmente können dieser auch in Form einer Pigmentpräparation, wie beispielsweise als Pellet oder Granulat oder Flüssigdispersion zugegeben werden. Der Anteil an Perlglanzpigmenten in derartigen Pigmentpräparationen liegt üblicherweise in einem Bereich von 10 bis 95 Gew.-%, bevorzugt in einem Bereich von 30 bis 95 Gew.-%, besonders bevorzugt in einem Bereich von 40 bis 90 Gew.-%, jeweils bezogen auf das Gesamtgewicht der Pigmentpräparation.

Die erfindungsgemäße Drucktinte ist bevorzugt eine Tintenstrahldrucktinte.

Die nachfolgenden Beispiele erläutern die Erfindung ohne sie jedoch zu beschränken.

**Beispiel 1a:**

1 kg Kaliglimmer Mica MD 2800 der Fa. Minelco Specialities Ltd. England wurde 1h bei 700°C kalziniert, anschließend mit 1000 mL VE-Wasser versetzt und dann in einem Laborkoller der Fa. American Cyanamid Company ca. 1h delaminiert.

Der resultierende Kuchen wurde anschließend mit VE-Wasser auf 35 Gew.-% Feststoffgehalt gebracht und über ein Laborsieb des Typs Separator der Fa. Sweco < 25 μm gesiebt.

Die so erhaltene feine Micafraktion wurde dann in einem Labordissolver der Fa. Pendraulik des Typs TD 200 5h behandelt. Hierbei ist darauf zu achten, dass durch Kühlung die Temperatur der Suspension 80°C nicht übersteigt. Die Micasuspension wurde dann mit VE-Wasser auf 3 Gew.-% Feststoffgehalt verdünnt und über ein Sedimentationsgefäß 5h absedimentiert. Der Überstand wurde abgesaugt, und der Bodensatz erneut mit Wasser aufgenommen, kräftig aufgerührt und erneut 5h absedimentiert. Dieser Vorgang wurde insgesamt 4-mal wiederholt, bis nahezu kein Überstand mehr zu erkennen war.

Das Sedimentationsgefäß besaß eine zylindrische Form mit den Maßen: d= 50cm; h= 50cm.

Der aus den Überständen stammende Mica wurde in einem großen Behältnis gesammelt und durch Zugabe von NaCl zum Absetzen gebracht. Nach ca. 48h wurde die überstehende klare Salzlösung abgesaugt und der erhaltene Filterkuchen als Ausgangsmaterial für weitere Beschichtungen verwendet.

**Beispiel 1b:**

1 kg Kaliglimmer Mica MD 2800 der Fa. Minelco Specialities Ltd. England wurde mit 1000 mL VE-Wasser versetzt und dann in einem Laborkoller der Fa. American Cyanamid Company ca. 2h delaminiert.

Der resultierende Kuchen wurde anschließend mit VE-Wasser auf 35 Gew.-% Feststoffgehalt gebracht und über ein Laborsieb des Typs Separator der Fa. Sweco < 25 $\mu$m gesiebt.

Die so erhaltene feine Micafraktion wurde dann in einem Labordissolver der Fa. Pendraulik des Typs TD 200 5h behandelt. Hierbei ist darauf zu achten, dass durch Kühlung die Temperatur der Suspension 80°C nicht übersteigt.

Die Micasuspension wurde dann mit VE-Wasser auf 3 Gew.-% Feststoffgehalt verdünnt und über ein Sedimentationsgefäß 5h absedimentiert. Der Überstand wurde abgesaugt, und der Bodensatz erneut mit Wasser aufgenommen, kräftig aufgerührt und erneut 5h absedimentiert. Dieser Vorgang wurde insgesamt 4-mal wiederholt, bis nahezu kein Überstand mehr zu erkennen war.

Das Sedimentationsgefäß besaß eine zylindrische Form mit den Maßen: d= 50cm; h= 50cm.

Der aus den Überständen stammende Mica wurde in einem großen Behältnis gesammelt und durch Zugabe von NaCl zum Absetzen gebracht. Nach ca. 48h wurde die überstehende klare Salzlösung abgesaugt und der erhaltene Filterkuchen als Ausgangsmaterial für weitere Beschichtungen verwendet.

**Beispiel 2:**

100g plättchenförmiger Kaliglimmer nach Beispiel 1a wurde in VE-Wasser suspendiert. Durch Zudosieren von verdünnter Salzsäure wurde ein pH-Wert von 2,2 eingestellt und die Suspension auf 80°C erhitzt. Dann wurden 50 mL einer Sn-Chloridlösung mit c(Sn)=24g/L innerhalb 90 min zudosiert. Durch gleichzeitiges Einleiten einer 15 Gew.-%igen Erdalkalilauge wurde der pH-Wert konstant bei 2,2 gehalten. Nach etwa 1/4h Unterbrechung, während dieser weiter gerührt wurde, stellte man den pH-Wert der Lösung durch Zudosieren von verdünnter Salzsäure auf 1,8 ein. Anschließend begann man mit der Zugabe von 2,4 L einer Lösung von 150 g $TiCl_4$ und 50 g HCl pro Liter. Durch gleichzeitiges Einleiten einer 15%igen Erdalkalilauge wurde der pH-Wert konstant gehalten.

Am Ende der Zugabe erhielt man einen kräftigen, silbrigen Perlglanz. Die Suspension wurde nach 1h Nachrühren abgekühlt, über einen Büchnertrichter gesaugt und mit VE-Wasser nahezu ionenfrei gewaschen.

Zuletzt wurde das Pigment 20 Minuten lang bei 800°C kalziniert.

**Beispiel 3:**

100g plättchenförmiger Kaliglimmer nach Beispiel 1b wurde in VE-Wasser suspendiert. Durch Zudosieren von verdünnter Salzsäure wurde ein pH-Wert von 2,2 eingestellt und die Suspension auf 80°C erhitzt. Dann wurden 50 ml einer Sn-Chloridlösung mit c(Sn)=24g/L innerhalb 90 min zudosiert. Durch gleichzeitiges Einleiten einer 15 Gew.-%igen Erdalkalilauge wurde der pH-Wert konstant bei 2,2 gehalten. Nach etwa 1/4h Unterbrechung, während dieser weiter gerührt wurde, stellte man den pH-Wert der Lösung durch Zudosieren von verdünnter Salzsäure auf 1,8 ein. Anschließend begann man mit der Zugabe von 2,4 L einer Lösung von 150 g $TiCl_4$ und 50 g HCl pro Liter. Durch gleichzeitiges Einleiten einer 15%igen Erdalkalilauge wurde der pH-Wert konstant gehalten.

Am Ende der Zugabe erhielt man einen kräftigen, silbrigen Perlglanz. Die Suspension wurde nach 1h Nachrühren abgekühlt, über einen Büchnertrichter gesaugt und mit VE-Wasser nahezu ionenfrei gewaschen.

Zuletzt wurde das Pigment 20 Minuten lang bei 800°C kalziniert.

**Beispiel 4:**

100g kommerziell verfügbares ECR-Glas der Fa. Glassflake Ltd. (GF100NM) mit einer durchschnittlichen Dicke von ca. 95 nm und einer Größe $d_{50}$ = 7 $\mu$m wurden in VE-Wasser suspendiert. Durch Zudosieren von verdünnter Salzsäure wurde ein pH-Wert von 2,2 eingestellt und die Suspension auf 80°C erhitzt. Dann wurden 50 mL einer Sn-Chloridlösung mit c(Sn)=24g/L innerhalb 90 min zudosiert. Durch gleichzeitiges Einleiten einer 15 Gew.-%igen Erdalkalilauge wurde der pH-Wert konstant bei 2,2 gehalten. Nach etwa 1/4h Unterbrechung, während dieser weiter gerührt wird, stellte man den pH-Wert der Lösung durch Zudosieren von verdünnter Salzsäure auf 1,8 ein. Anschließend begann man mit der Zugabe von 5,6 L einer Lösung von 150 g $TiCl_4$ und 50 g HCl pro Liter. Durch gleichzeitiges Einleiten einer 15 Gew.-%igen Erdalkalilauge wurde der pH-Wert konstant gehalten.

Am Ende der Zugabe erhielt man einen kräftigen, roten Perlglanz. Die Suspension wurde nach 1h Nachrühren abgekühlt, über einen Büchner Trichter gesaugt und mit VE-Wasser nahezu ionenfrei gewaschen.

Zuletzt wurde das Pigment 40 Minuten lang bei 550°C kalziniert.

**Beispiel 5:**

Kommerziell erhältliche $TiO_2$-beschichtetes silbernes Perlglanzpigment Magna Pearl 3100 Silver (Fa. BASF Catalysts).

**Beispiel 6:**

Kommerziell erhältliches $TiO_2$-beschichtetes silbernes Perlglanzpigment Prestige Soft Silber (Fa. Eckart GmbH).

Diese Pigmente basieren auf einem Glimmer mit einem $d_{50}$-Wert von 6,5 $\mu$m und einer mittleren Dicke von 119 nm.

**Beispiel 7:**

Kommerziell erhältliches $TiO_2$-beschichtetes silbernes Perlglanzpigment Iriodin 111 (Fa. Merck KGaA).

**Vergleichsbeispiel 1:**

Kommerziell erhältliches $TiO_2$-beschichtetes silbernes Perlglanzpigment Iriodin 120 (Fa. Merck KGaA).

**Vergleichsbeispiel 2:**

Kommerziell erhältliches $TiO_2$-beschichtetes silbernes Perlglanzpigment Magna Pearl 1000 Silver (Fa. BASF Catalysts).

**Beispiel 8:** Wasserbasierende Tintenstrahltinte (drop-on-demand-Verfahren)

1 g Perlglanzpigment aus Beispiel 2
68,2 g VE-Wasser
25 g Diethylenglykol
6 g 1,6-Hexandiol
0.5 g Genapol X080 (Clariant, Deutschland)
0.3 g Acticide MBS

Die Mischung wurde 10 Minuten gerührt. Filtriert über 20 $\mu$m Metallnetzfilter.

Drucktest:

Die Tintenstrahltinte wurde in die schwarze Patrone eines kommerziell erhältlichen Tintenstrahldruckers eingefüllt.

| | |
|---|---|
| Druckkopf: | HP 51645A |
| Druckbedingungen: | beste |
| Papier: | HP transparent ink jet film |

Die Drucke zeigen einen silbernen Perlglanz. Eine Verstopfung der Düsen trat nicht auf. Nach Druckpausen muß das Pigment wieder aufgerührt werden.

**Beispiel 9:** Lösemittelbasierende Tintenstrahltinte (drop-on-demand-Verfahren)

2 g_Perlglanzpigment aus Beispiel 2
90,5 g Butylglykolacetat
7 g Pioloform BN18
0.5 g Fluorad FC 4430 (Fa. 3M Speciality Materials)

Die Mischung wurde 60 Minuten gerührt. Filtriert über 20 $\mu$m Metallnetzfilter.

Drucktest:

Die Tintenstrahltinte wurde in einem mit einem Rührer ausgestatteten Gefäß vorgelegt und von dort aus in das Tintenversorgungssystem eines Tintenstrahldruckkopfes gepumpt. Die Druckkopftemperatur wurde so eingestellt, dass die erforderliche Viskosität von 8-20 mPa·s erreicht wurde.

| | |
|---|---|
| Druckkopf: | Xaar 1001 |
| Druckbedingungen: | Tintentemperatur 40°C |
| | Tropfenerzeugungsfrequenz 1.5 kHz |
| | 3 dpd Graustufeneinstellung |
| Papier: | Canon Microporous Foto Paper |

Beim Verdrucken der Tintenstrahltinte kam es zu keinen Düsenausfällen. Die Drucke zeigten einen silbernen Perlglanzeffekt und wiesen einen guten Abriebwiderstand auf.

**Physikalische Charakterisierung I der Tintenstrahltinte**

Um die Druckeigenschaften verschiedener Perlglanzpigmente darzustellen, wurden lösemittelbasierende Tintenstrahltinten hergestellt und verdruckt. Die Auswertung umfasste Druckkopfverstopfung und Deckkraft der Tinten vor und nach dem Verdrucken.
Eine Druckkopfverstopfung wird durch die Blockierung feiner Kanäle oder Filter verursacht und äußert sich durch einen höheren Durchflusswiderstand des Druckkopfes.
Die resultierenden Drucke als auch die Tinten vor und nach dem Durchgang durch den Druckkopf wurden anschließend charakterisiert.
In den Druckversuchen sollte die Auflösung bei mindestens 300 dpi liegen.
Zur Charakterisierung der Drucktinten wurden diese während des Verdruckens direkt nach dem Durchgang durch den Druckkopf in einem Behältnis gesammelt. Ein Teil dieser Drucktinte sowie die Ausgangsdrucktinte wurden dann den jeweiligen Bestimmungsmethoden zugeführt.

**Ia Teilchengrößenmessung**

Die Pigmente der erfindungsgemäßen Beispiele und Vergleichsbeispiele wurden als Pulver als auch in der entsprechenden Tinte vor und nach dem Verdrucken (Durchgang durch den Druckkopf) mittels Laserbeugungsmethoden charakterisiert (Gerät: Cilas 1064).
Zur Pulvercharakterisierung wurden 0,5 g Pigment mit 50 mL Isopropanol mittels einem Magnetrührer vermischt und anschließend 300 Sekunden im Ultraschallbad Sonorex IK 52 der Fa. Bandelin behandelt. 2-3 mL Probensubstanz wurden dann zur Messung in die Probenaufgabe des Geräts Cilas 1064 pipettiert.
Die Vermessung der Drucktinten erfolgte durch Einwaage von 1,5 g Tinte auf 40 mL Isopropanol. Anschließend wurde die Suspension mittels eines Magnetrührers vermischt und 300 Sekunden im Ultraschallbad Sonorex IK 52 der Fa Bandelin behandelt. 2-3 mL Probensubstanz wurden dann zur Messung in die Probenaufgabe des Geräts Cilas 1064 pipettiert.

**Ib Deckung**

Die Drucktinten vor sowie nach dem Verdrucken durch den Druckkopf wurden mittels eines Rakelabzugsgerätes mit einer Nassfilmdicke von 12 $\mu$m auf Prüfkarten Nr. 2853 der Fa. Byk Gardner (Kontrastpapier) appliziert.

Zum Vergleich der Deckfähigkeit lassen sich zum einen die L*-Werte (CIELAB) auf schwarzem Untergrund untereinander vergleichen. Zum anderen lassen sich durch Bildung des Deckungsquotienten Untergrund unabhängige Maßzahlen für die Deckkraft der jeweiligen Drucktinte ermitteln.

Aufgrund leichter Schwankungen der Graustufen der einzelnen Deckungskarten ist der sog. Deckungsquotient (Dq) eine geeignete Maßzahl zur Darstellung der Deckkraft der jeweiligen Drucktinte. Hierbei wird der Quotient der Helligkeitswerte auf schwarzem Hintergrund zu den Helligkeitswerten auf weißem Hintergrund berechnet.

$$\text{Deckungsquotient } Dq = \frac{L^*_{Schwarz}}{L^*_{wei\beta}}$$

Der Deckungsquotient gibt also die Deckkraft der jeweiligen Drucktinte nivelliert auf die jeweilige Deckungskarte an. Er erlaubt den Vergleich der Deckkraft der jeweiligen Drucktinten zueinander.

**Ic Glanzmessungen**

Der Glanz ist ein Maß für die gerichtete Reflexion.
Der streuende Charakter speziell von feinen Effektpigmenten lässt sich zusätzlich durch die Messung des Glanzes charakterisieren. Stark streuende Proben sollten mithin einen niedrigen Glanz aufweisen.

Es wurden die Nassrakelapplikationen aus Ib sowie die resultierenden Andrucke der jeweiligen Beispiele mit Hilfe eines Micro-Tri-Gloss Glanzmessgerätes der Fa. Byk Gardner mit einem Messwinkel von 60° (für schwach glänzende Proben) bei schwarzem Hintergrund vermessen. Eine Messgeometrie von 60° ist für den sogenannten "Mittelglanz" im Bereich von 10 bis 70 Glanzpunkten geeignet, wobei ein höherer Zahlenwert bei den Glanzpunkten bei einem höheren Glanz gemessen wird.

**Beispiel 10:** Herstellung der Tintenstrahltinte I und Druckversuch mit Druckkopf Spectra Nova PH 256/80AAA

Drucktinte (Drop-on-Demand Verfahren):

Tintenbasis:

| | |
|---|---|
| Butylglycolacetat: | 93.5% |
| Neocryl B725 (Acrylatharz, DSM Neo Resins): | 6.5% |

Die Tintenbasis wurde bei Raumtemperatur gerührt, bis sich eine klare Lösung ergab. Filtriert wurde über 20 $\mu$m Metallnetzfilter.

Es ergab sich eine Viskosität von ca. 9 mPa·s bei 25°C.

Tinte:

4,5 g Perlglanzpigment wurden langsam und unter Rühren zu 295,5 g Tintenbasis gegeben und 10 Minuten lang mit einem Utra-Turrax Labordispergierer bei 7000 U/min dispergiert.

Die fertige Tinte wurde über einen 20 $\mu$m Metallnetzfilter filtriert.

Drucktest:

Die Tintenstrahltinte wurde in einem mit einem Rührer ausgestatteten Gefäß vorgelegt und von dort aus in das Tintenversorgungssystem eines Tintenstrahldruckkopfes gepumpt. Die Druckkopftemperatur wurde auf 30°C eingestellt, um die erforderliche Viskosität von 8-20 mPa·s zu erreichen.

| | |
|---|---|
| Druckkopf: | Spectra Nova PH 256/80AAA (interner Filter: 20$\mu$m) |
| Tintenversorgungssystem: | Spectra Apollo II Print head support kit |
| Bedingungen: | Kopftemperatur 30°C |
| | Tropfenfrequenz 5 kHz |

(fortgesetzt)

Betriebsspannung 100V
Wellenform 10/5/5µs
Schrägstellung 45°
Testform: 100% Jet pattern, all nozzles, no gap, 15 Minuten Dauerbetrieb

Konstruktionsbedingt wurde Tinte nicht in Bewegung gehalten.

Ergebnisse:

A) Verdruckbarkeit:

| Pigment | D50 (µm) | D90 (µm) | Verstopfung | Deckungsverlust auf zu bedruckendem Substrat |
|---|---|---|---|---|
| Beispiel 2 | 4.2 | 7.0 | Keine | Kein |
| Beispiel 3 | 4.4 | 7.4 | Keine | Kein |
| Vergleichsbeispiel 1 | 11,2 | 18,5 | vollständig | 99% |
| Vergleichsbeispiel 2 | 20,0 | 34,7 | vollständig | 99% |

B) Farb- und Glanzmessungen von Rakelungen (Rakelabzügen):

| Pigment | L* Tinte | | | | | L* verdruckte Tinte | | | | | Delta $D_q$ | Delta Glanz 60° weiß |
|---|---|---|---|---|---|---|---|---|---|---|---|---|
| | $L^*_{schwarz}$ | $L^*_{weiß}$ | $D_q$ | Glanz 60° weiß | D90 ($\mu$m) | $L.^*_{schwarz}$ | $L^*_{weiß}$ | $D_q$ | Glanz 60° weiß | D90 ($\mu$m) | | |
| Beispiel 2 | 40,92 | 92,99 | 0,440 | 64,3 | 6,9 | 41,54 | 93,06 | 0,446 | 67,0 | 6,8 | 0,006 | 2,7 |
| Beispiel 3 | 44,64 | 93,03 | 0,480 | 72,3 | 7,5 | 44,88 | 93,45 | 0,480 | 75,8 | 7,5 | 0,000 | 3,5 |
| Vergleichsbeispiel. 1 | n.m. | n.m | n.m | n.m | n.m | n.m. | n.m. | n.m. | n.m | n.m | n.m | n.m. |
| Vergleichsbeispiel 2 | n.m. | n.m | n.m | n. m | n.m | n.m. | n.m. | n.m. | n.m | n.m | n.m | n.m. |
| n.m. = nicht möglich | | | | | | | | | | | | |

C) Farb- und Glanzmessungen von Andrucken:

| Pigment | Glanz 60° | |
|---|---|---|
| | Untergrund | bedruckt |
| Beispiel 2 | 42,1 | 52,2 |
| Vergleichsbeispiel 1 | n. m. | n. m |
| Vergleichsbeispiel 2 | n. m. | n. m |

Der entscheidende Faktor für die Verdruckbarkeit von Perlglanzpigmenten in Tintenstrahldruckköpfen ist die Teilchengröße. Es konnte eine kritische Obergrenze in der Teilchengrößenverteilung von Perlglanzpigmenten für die Anwendung in einem Spectra Nova PH 256/80AAA Tintenstrahldruckkopf ermittelt werden. Die erfindungsgemäß zu verwendenden Perlglanzpigmente verursachten im Drucktest keine Störungen.

Wie oben dargestellt, wurden Pigmente, die nicht diesem Kriterium entsprachen, teilweise oder vollständig von den feinen Kanälen oder Filtern im Druckkopf zurückgehalten oder setzten die Düsen zu.

Die Pigmente aus den erfindungsgemäßen Beispielen 2 und 3 sind feinteilig und erzeugten dennoch einen guten Glanz und Perleffekt im Tintenstrahldruck.

Noch besser lässt sich die Deckkraft mit dem Deckungsquotienten beschreiben. Hier zeigte sich eine vergleichbare Deckkraft in Beispiel 3 sowie eine Zunahme bei Beispiel 2 gegenüber der Ausgangstinte.

Die Glanzwerte waren nach dem Verdrucken generell höher als bei der ursprünglichen Drucktinte. Die Glanzmessung stellt dabei ein Maß für die gerichtete Reflexion dar. Besonders feine Pigmentpartikel bewirken aufgrund ihres erhöhten Kantenanteiles mehr diffuse Streuung. Je mehr feine Teilchen in der Drucktinte vorhanden sind, desto höher ist der Streulichtanteil und desto geringer ist der gemessene Glanz. Der Glanz ist mithin indirekt ein Maß für den Durchgang der Pigmentteilchen durch den Druckkopf.

Hierin steckt auch die Erklärung für die Zunahme der Glanzdifferenzen vor und nach dem Druck mit steigenden $D_{50}$- bzw. $D_{90}$-Werten. Von den gröberen Pigmenten wird ein Teil im Druckkopf zurückgehalten. Der Pigmentanteil sinkt und damit auch das Streuvermögen der jeweiligen Drucktinte, was einen ansteigenden Glanzwert zur Folge hat.

**Beispiel 11:** Herstellung einer Tintenstrahltinte II und Druckversuch mit Tintenstrahldruckkopf Xaar 1001

Drucktinte (Drop-on-Demand Verfahren):
Tintenbasis:

| | |
|---|---|
| Butylglycolacetat (Lösemittel) | 95,5% |
| Vinylite VYHH (Vinylacetat-Vinylchlorid-Copolymer, DOW): | 4,2% |
| BYK-340 (Tensid) | 0,3% |

Die Tintenbasis wurde bei Raumtemperatur gerührt, bis sich eine ergab. Filtriert wurde über 20 $\mu$m Metallnetzfilter.

Es ergab sich eine Viskosität von ca. 9 mPa·s bei 25°C.

Tinte:

25 g Perlglanzpigment wurden langsam und unter Rühren zu 475 g Tintenbasis gegeben und 10 Minuten lang mit einem Labor-Ultraschallgerät bei 150W Leistungseintrag dispergiert.

Die fertige Tinte wurde über einen 20 $\mu$m Metallnetzfilter filtriert.

Drucktest:

Die Tinte wurde in das Tintenversorgungssystem eines Tintenstrahldruckkopfes gefüllt. Die Druckkopftemperatur wurde auf 30°C eingestellt, um die erforderliche Viskosität von 6-20 mPa·s zu erreichen.

| | |
|---|---|
| Druckkopf: | Xaar 1001 |
| Tintenversorgungssystem: | JF Machines PicoColour 140 |

(fortgesetzt)

| Bedingungen: | Kopftemperatur 30° C |
| --- | --- |
| | Pumpeneinstellung 40U/min |
| | Meniskusvakuum 150mm |
| | Papiervorschub 2m/min |
| | Auflösung: 300dpi bei 7dpd |
| Testform: | Vollfläche |

Ergebnisse:

A) Verdruckbarkeit:

| Pigment | $D_{50}$ (µm) | $D_{90}$ (µm) | Düsenausfälle | Verstopfung |
| --- | --- | --- | --- | --- |
| Beispiel 2 | 4.2 | 7.0 | Nein | Keine |
| Beispiel 3 | 4.4 | 7.4 | Nein | Keine |
| Beispiel 5 | 5,2 | 8,5 | Nein | Keine |
| Beispiel 6 | 6,1 | 10,7 | Nein | Keine |
| Vergleichsbeispiel 1 | 11,2 | 18,5 | Ja | Ja |
| Vergleichsbeispiel 2 | 20,0 | 34,7 | Ja | Ja |

Wiederum ist der entscheidende Faktor für die Verdruckbarkeit von Perlglanzpigmenten in Tintenstrahldruckköpfen die Teilchengröße. Es konnte eine kritische Obergrenze in der Teilchengrößenverteilung von Perlglanzpigmenten für die Anwendung in dem industriellen Tintenstrahldruckkopf Xaar 1001 ermittelt werden. Die Perlglanzpigmente aus den Beispielen 2 bis 6 verursachten im Drucktest keine Störungen. Wie oben dargestellt, wurden Pigmente, die nicht diesem Kriterium entsprachen, teilweise oder vollständig von den feinen Kanälen oder Filtern im Druckkopf zurückgehalten oder setzten die Düsen zu.

**Beispiel 12:** Herstellung einer Druckfarbe III und Druckversuch mit Tintenstrahldruckkopf Xaar XJ126/80

Lösemittelbasierende Tintenstrahltinte (drop-on-demand-Verfahren)

4 g_Perlglanzpigment

90,5 g Butylglykolacetat

5 g Pioloform BN18

0.5 g Fluorad FC 4430 (Fa. 3M Speciality Materials)

Die Mischung wurde 60 Minuten gerührt und 2 Minuten lang mit Ultraschall dispergiert. Filtriert wurde über 20 µm Metallnetzfilter.

Drucktest:

Die Tintenstrahltinte wurde in einem mit einem Rührer ausgestatteten Gefäß vorgelegt und von dort aus in das Tintenversorgungssystem eines Tintenstrahldruckkopfes von Xaar, Typ XJ126/80 gepumpt. Der interne Filter des Druckkopfes wurde entfernt. Das Tintensystem gewährleistete einen ständigen Durchfluß der Tinte durch den Druckkopf.

| Druckkopf: | Xaar XJ 126/80 |
| --- | --- |
| Druckbedingungen: | Tintentemperatur 40°C |
| | Tropfenerzeugungsfrequenz 4.5 kHz |
| | Standardeinstellungen des Xaar-Treibers |
| | Testbild: Xaar Düsentestbild |

Papier: Canon Microporous Foto Paper

Ergebnisse:
A) Verdruckbarkeit:

| Pigment | $D_{50}$ ($\mu$m) | $D_{90}$ ($\mu$m) | Düsenausfälle | Verstopfung |
|---|---|---|---|---|
| Beispiel 2 | 4.2 | 7.0 | Nein | Keine |
| Beispiel 3 | 4.4 | 7.4 | Nein | Keine |
| Beispiel 5 | 5,2 | 8,5 | Nein | Keine |
| Beispiel 6 | 6,1 | 10,7 | Nein | Keine |
| Beispiel 7 | 6,6 | 11,9 | Nein | Keine |
| Vergleichsbeispiel 1 | 11,2 | 18,5 | Ja | Ja |
| Vergleichsbeispiel 2 | 20,0 | 34,7 | Ja | Ja |

Beim Verdrucken der Tintenstrahltinte kam es - abgesehen von den Vergleichsbeispielen 1 und 2 - bei den erfindungsgemäßen Beispielen 2 bis 6 innerhalb einer Stunde zu keinen Düsenausfällen. Die Drucke zeigen einen silbernen Perlglanzeffekt und weisen einen guten Abriebwiderstand auf.

**Physikalische Charakterisierung II der in der Tintenstrahltinte enthaltenen Perlglanzpigmente**

**IIa Bestimmung der mittleren Dicke des Substrates**

Die mittlere Substratdicke wurde nach verschiedenen Methoden bestimmt. Die Ergebnisse sind in Tabelle 3 aufgeführt.

In einem Fall wurden die Perlglanzpigmente 10 Gew.-%ig in einem 2K Klarlack Autoclear Plus HS der Fa. Sikkens GmbH mit einem Hülsenpinsel eingearbeitet und mit Hilfe einer Spiralrakel (26$\mu$m Nassfilmdicke) auf eine Folie appliziert und getrocknet. Nach 24h Abtrocknungszeit wurden von diesen Rakelabzügen Querschliffe angefertigt.

Die Querschliffe wurden im REM vermessen. Hierbei wurden pro Probe mindestens 100 Pigmentteilchen vermessen, um eine aussagefähige Statistik zu erhalten. Dabei wurde neben der Substratschichtdicke (mittlere Höhe $h_S$) auch die Schichtdicke der Metalloxidschicht ($d_M$) bestimmt.

Schließlich wurde die mittlere Substrathöhe nach Gleichung (7) berechnet. Hierbei wurde für den Substratradius die Hälfte der $d_{50}$-Werte der volumengemittelten Größenverteilung eingesetzt.

Die Gehalte an $TiO_2$ sowie an Substratmaterial wurden mittels RFA bestimmt.

Hierzu wurde das Perlglanzpigmentpulver direkt aus der Schüttung in ein Probenbehältnis, welches mit einer Polypropylenfolie 6 $\mu$m (Fa. Fluxana) überzogen wurde, gegeben und daraus vermessen. Als Messgerät diente das Gerät Advant-X der Fa. Thermo ARL.

Die Metalloxidgehalte nach Gleichung (1) sind in Tabelle 3 in Spalte 4 in Gew.-% bezogen auf Metalloxid und Substrat aufgeführt.

Schließlich musste noch die Schichtdicke von $TiO_2$ bestimmt werden. Hier arbeitete man anhand der Farben der Pigmente und der in der Literatur hierzu veröffentlichten üblichen Schichtdicken. Diese Oxidschichtdicken sind in Tabelle 3 in Spalte 6 in nm aufgeführt.

Die nach Gleichung (7) berechneten Werte sind in Tabelle 3 in Spalte 8 in nm aufgeführt.

**Tabelle 3: Physikalische Charakterisierung II der Beispiele**

| Probe | Substrat | Metall-oxid | Gehalt Metalloxid (Gl. 1) in Gew.-% | Farbe | Schichtdicke Metalloxid in nm | | $D_{50}$ [µm] (Gerät: Cilas 1064) | hs [nm] | $h_S$ aus REM am Glimmer [nm] | | $h_S$ aus REM am Perlglanz im Schliff [nm] |
|---|---|---|---|---|---|---|---|---|---|---|---|
| | | | | | aus Farbe | aus REM | | nach Gl. 7 | Pulver | Schliff | |
| Beispiel 2 | Glimmer gemäß Bsp. 1b | $TiO_2$ | 63,2 | Silber | 50 | 52 | 4,2 | 100 | 82 | 94 | 119 |
| Beispiel 3 | Glimmer gemäß Bsp. 1a | $TiO_2$ | 59,7 | Silber | 50 | 51 | 4.4 | 113 | 84 | 97 | 124 |
| Beispiel 5 | Glimmer (unbekannt) | $TiO_2$ (Magna Pearl 3100) | 49,3 | Silber | 50 | 34 | 5,2 | 119[1] | - | -- | 129 |
| Beispiel 6 | Glimmer | $TiO_2$ | 52 | Silber | 50 | 38 | 6,1 | 118[1] | 118 | 133 | 145 |
| [1] zur Berechnung von $h_S$ nach Gleichung (7) wurde für die Schichtdicke des Metalloxids der aus REM bestimmte Wert eingesetzt | | | | | | | | | | | |

**Ergebnisse der Schichtdickenbestimmungen:**

Die mittlere Schichtdicke des Substrats $h_S$ liegt unabhängig von der Bestimmungsmethode in allen erfindungsgemäßen Beispielen geringer als 150 nm. In den erfindungsgemäßen Beispielen wurde mithin ein sehr feiner und dünner Glimmer verwendet.

Im Detail zeigen sich jedoch gewisse systematische Abweichungen bei den nach verschiedenen Methoden erhaltenen Ergebnissen. Diese seien im Folgenden kurz diskutiert:

Weiterhin findet man gute Übereinstimmungen der über die Metalloxidgehalte und - schichtdicken nach Gleichung (7) berechneten Werte mit den mittleren Schichtdicken, die nach der Auswertung der senkrecht orientierten Pulver der Glimmer (Tabelle 3, Spalte 10) bzw. der Glimmer im Rakelabzug gefunden wurden.

Diese Befunde sprechen für die Konsistenz des Modells der Gleichungen 1 - 7 und die Zuverlässigkeit der Ermittlung der mittleren Schichtdicke nach dieser Methode.

Die Bestimmung der mittleren Schichtdicke der Glimmer anhand der Querschliffe (Tabelle 3, Spalte 11) weist systematisch höhere Werte im Vergleich zur Bestimmung an senkrecht orientierten Pulvern auf. Dies dürfte im Wesentlichen auf zwei Faktoren zurückzuführen sein:

Glimmer weist am Rand eine etwas geringere Dicke als in der Mitte auf. Daher dürften die Werte nach der Pulvermethode potentiell etwas zu niedrig sein.

Die Pigmente der Querschliffmethode weisen etwas unterschiedliche Orientierungen der Plättchen innerhalb des Lacks auf. Wie oben ausgeführt führt dies zu scheinbar höheren Werten.

Die Bestimmung der mittleren Schichtdicke $h_S$ anhand der Querschliffe der Perlglanzpigmente selbst führt zu potentiell noch höheren Werten (Tabelle 3, Spalte 12).

Daher wird im Rahmen dieser Erfindung die mittlere Substratschichtdicke bevorzugt nach Gleichung (7) ermittelt, wenn die Schichtdicken der optisch aktiven Schicht 40 nm bis 180 nm betragen.

**Patentansprüche**

1. Drucktinte enthaltend Perlglanzpigmente und mindestens ein Lösemittel und/oder mindestens eine strahlungshärtbare Komponente und/oder mindestens ein Bindemittel, wobei die Perlglanzpigmente ein weitgehend transparentes plättchenförmiges Substrat mit einer Dichte $\rho_S$, das aus der Gruppe, bestehend aus natürlichem Glimmer, synthe-tischem Glimmer, Glasflakes, $SiO_2$-Plättchen, $Al_2O_3$-Plättchen und deren Gemische, ausgewählt ist, und als optisch wirksame Beschichtung mit einer Dichte $\rho_M$ eine einzige hochbrechende Metalloxidschicht umfassen, **dadurch gekennzeichnet,**
   **dass** die Perlglanzpigmente einen $d_{90}$-Wert der Summenhäufigkeitsverteilung der volumengemittelten Größenverteilungsfunktion aus einem Bereich von 3,5 bis 15 $\mu$m aufweisen,
   wobei zwischen dem Metalloxidgehalt in Gew.-%, bezogen auf das Gesamtgewicht von Metalloxid und Substrat, und der mittleren Schichtdicke der Metalloxidschicht folgender Zusammenhang besteht:

   ein Metalloxidgehalt von 30 - 80 Gew.-% bei einer mittleren Metalloxidschichtdicke von über 20 bis 50 nm;
   ein Metalloxidgehalt von 50 - 85 Gew.-% bei einer mittleren Metalloxidschichtdicke von über 50 bis 75 nm;
   ein Metalloxidgehalt von 59 - 89 Gew.-% bei einer mittleren Metalloxidschichtdicke von über 75 bis 95 nm;
   ein Metalloxidgehalt von 66 - 92 Gew.-% bei einer mittleren Metalloxidschichtdicke von über 95 bis 125 nm;
   ein Metalloxidgehalt von 69 - 96 Gew.-% bei einer mittleren Metalloxidschichtdicke von über 125 bis 215 nm.

2. Drucktinte nach Anspruch 1,
   **dadurch gekennzeichnet,**
   **dass** die Perlglanzpigmente einen $d_{90}$-Wert der Summenhäufigkeitsverteilung der volumengemittelten Größenverteilungsfunktion aus einem Bereich von 4 bis 13 $\mu$m aufweisen.

3. Drucktinte nach einem der vorstehenden Ansprüche,
   **dadurch gekennzeichnet,**
   **dass** das Substrat der Perlglanzpigmente eine mittlere Höhe $h_S$ aus einem Bereich von 40 bis 150 nm aufweist.

4. Drucktinte nach einem der vorstehenden Ansprüche,
   **dadurch gekennzeichnet,**
   **dass** das Substrat der Perlglanzpigmente eine mittlere Höhe $h_S$ aus einem Bereich von 50 bis 140 nm aufweist.

5. Drucktinte nach einem der vorstehenden Ansprüche,

**dadurch gekennzeichnet,**
**dass** die Perlglanzpigmente einen $d_{95}$-Wert der Summenhäufigkeitsverteilung der volumengemittelten Größenverteilungsfunktion aus einem Bereich von 5 bis 20 $\mu$m aufweisen.

6. Drucktinte nach einem der vorstehenden Ansprüche,
**dadurch gekennzeichnet,**
**dass** die optisch wirksame Beschichtung der Perlglanzpigmente eine hochbrechende Beschichtung, vorzugsweise mit einem Brechungsindex $n_M > 2{,}0$ ist.

7. Drucktinte nach einem der Ansprüche 1 bis 6,
**dadurch gekennzeichnet,**
**dass** die Metalloxidschicht der Perlglanzpigmente Metalloxide, die aus der Gruppe, bestehend aus Titanoxid, Eisenoxid, Ceroxid, Chromoxid, Zinnoxid, Zirkoniumoxid, Kobaltoxid und Mischungen davon, ausgewählt werden, enthält oder daraus besteht.

8. Drucktinte nach einem der vorstehenden Ansprüche,
**dadurch gekennzeichnet,**
**dass** die Drucktinte 0,1 bis 30 Gew.% Perlglanzpigment, bezogen auf das Gesamtgewicht der Drucktinte, enthält.

9. Drucktinte nach einem der vorstehenden Ansprüche,
**dadurch gekennzeichnet,**
**dass** die Drucktinte auf organischem Lösemittel und/ oder Wasser basiert und der Anteil an organischem Lösemittel und/ oder Wasser bei 10 bis 95 Gew.%, bezogen auf das Gesamtgewicht der Drucktinte, liegt.

10. Drucktinte nach einem der vorstehenden Ansprüche,
**dadurch gekennzeichnet,**
**dass** die Drucktinte eine strahlungshärtbare Tinte ist.

11. Drucktinte nach einem der vorstehenden Ansprüche,
**dadurch gekennzeichnet,**
**dass** die Drucktinte eine schmelzbare Tinte ist.

12. Drucktinte nach einem der vorstehenden Ansprüche,
**dadurch gekennzeichnet,**
**dass** die Drucktinte eine Tintenstrahltinte ist.

13. Verfahren zur Herstellung der Drucktinte nach einem der vorstehenden Ansprüche,
**dadurch gekennzeichnet,**
**dass** das Verfahren folgende Schritte umfasst:

(a1) Klassieren von weitgehend transparenten plättchenförmigen Substraten,
(b1) Beschichten des in Schritt (a1) erhaltenen klassierten Substrates mit einer einzigen optisch wirksamen, vorzugsweise hochbrechenden, Schicht, unter Erhalt eines Perlglanzpigmentes mit einem $d_{90}$-Wert der Summenhäufigkeitsverteilung der volumengemittelten Größenverteilungsfunktion aus einem Bereich von 3,5 bis 15 $\mu$m,
oder
(a2) Beschichten von weitgehend transparenten plättchenförmigen Substraten mit einer einzigen optisch wirksamen, vorzugsweise hochbrechenden, Schicht,
(b2) Klassieren des in (a2) erhaltenen Perlglanzpigments unter Erhalt eines Perlglanzpigmentes mit einem $d_{90}$-Wert der Summenhäufigkeitsverteilung der volumengemittelten Größenverteilungsfunktion aus einem Bereich von 3,5 bis 15 $\mu$m,
und anschließend
(c) Mischen der erhaltenen Perlglanzpigmente mit mindestens einem Lösemittel und/ oder mindestens einer strahlungshärtbaren Komponente und/ oder mindestens einem Bindemittel unter Erhalt der Drucktinte, vorzugsweise Tintenstrahltinte.

14. Verwendung von Perlglanzpigmenten gemäß einem der Ansprüche 1 bis 12, die ein weitgehend transparentes plättchenförmiges Substrat mit einer Dichte $\rho_S$ und einer einzigen optisch wirksamen Beschichtung mit einer Dichte

$\rho_M$ aufweisen, mit einem $d_{90}$-Wert der Summenhäufigkeitsverteilung der volumengemittelten Größenverteilungsfunktion aus einem Bereich von 3,5 bis 15 $\mu$m in Drucktinte.

15. Verwendung von Perlglanzpigmenten gemäß Anspruch 14,
    **dadurch gekennzeichnet,**
    **dass** die Drucktinte eine Tintenstrahltinte ist.

**Claims**

1. Printing ink containing pearlescent pigments and at least one solvent and/or at least one radiation-curable component and/or at least one binding agent, the pearlescent pigments comprising a substantially transparent platelet-shaped substrate having a density ps selected from the group comprising natural mica, synthetic mica, glass flakes, $SiO_2$ platelets, $Al_2O_3$ platelets and mixtures thereof, and a single high-refractive metal oxide layer as an optically active coating having a density $\rho_M$,
   **characterised in that**
   the pearlescent pigments have a $d_{90}$ value for the cumulative frequency distribution of the volume-averaged size distribution function in a range of from 3.5 to 15 $\mu$m,
   and the relationship between the metal oxide content as a % by weight, based on the total weight of metal oxide and substrate, and the average layer thickness of the metal oxide layer is as follows:

   a metal oxide content of 30 - 80 % by weight for an average metal oxide layer thickness ranging from 20 to 50 nm;
   a metal oxide content of 50 - 85 % by weight for an average metal oxide layer thickness ranging from 50 to 75 nm;
   a metal oxide content of 59 - 89 % by weight for an average metal oxide layer thickness ranging from 75 to 95 nm;
   a metal oxide content of 66 - 92 % by weight for an average metal oxide layer thickness ranging from 95 to 125 nm;
   a metal oxide content of 69 - 96 % by weight for an average metal oxide layer thickness ranging from 125 to 215 nm.

2. Printing ink as claimed in claim 1,
   **characterised in that**
   the pearlescent pigments have a $d_{90}$ value for the cumulative frequency distribution of the volume-averaged size distribution function in a range of from 4 to 13 $\mu$m.

3. Printing ink as claimed in one of the preceding claims,
   **characterised in that**
   the substrate of the pearlescent pigments has an average height hs in a range of from 40 to 150 nm.

4. Printing ink as claimed in one of the preceding claims,
   **characterised in that**
   the substrate of the pearlescent pigments has an average height hs in a range of from 50 to 140 nm.

5. Printing ink as claimed in one of the preceding claims,
   **characterised in that**
   the pearlescent pigments have a $d_{95}$ value for the cumulative frequency distribution of the volume-averaged size distribution function in a range of from 5 to 20 $\mu$m.

6. Printing ink as claimed in one of the preceding claims,
   **characterised in that**
   the optically active coating of the pearlescent pigments is a high-refractive coating, preferably having a refraction index $n_M$ > 2.0.

7. Printing ink as claimed in one of claims 1 to 6,
   **characterised in that**
   the metal oxide layer of the pearlescent pigments contains or comprises metal oxides selected from the group comprising titanium oxide, iron oxide, cerium oxide, chromium oxide, tin oxide, zirconium oxide, cobalt oxide and mixtures thereof.

8. Printing ink as claimed in one of the preceding claims,

**characterised in that**
the printing ink contains 0.1 to 30 % by weight of pearlescent pigment, based on the total weight of the printing ink.

9.  Printing ink as claimed in one of the preceding claims,
    **characterised in that**
    the printing ink is based on organic solvent and/or water and the proportion of organic solvent and/or water is 10 to 95 % by weight, based on the total weight of the printing ink.

10. Printing ink as claimed in one of the preceding claims,
    **characterised in that**
    the printing ink is a radiation-curable ink.

11. Printing ink as claimed in one of the preceding claims,
    **characterised in that**
    the printing ink is a meltable ink.

12. Printing ink as claimed in one of the preceding claims,
    **characterised in that**
    the printing ink is an ink-jet ink.

13. Method for producing the printing ink as claimed in one of the preceding claims,
    **characterised in that**
    the method comprises the following steps:

    (a1) classifying substantially transparent platelet-shaped substrates,
    (b1) coating the classified substrate obtained in step (a1) with a single optically active, preferably high-refractive, layer to obtain a pearlescent pigment having a $d_{90}$ value for the cumulative frequency distribution of the volume-averaged size distribution function in a range of from 3.5 to 15 $\mu$m,
    or
    (a2) coating substantially transparent platelet-shaped substrates with a single optically active, preferably high-refractive, layer,
    (b2) classifying the pearlescent pigment obtained in (a2) to obtain a pearlescent pigment having a $d_{90}$ value for the cumulative frequency distribution of the volume-averaged size distribution function in a range of from 3.5 to 15 $\mu$m,
    and then
    (c) mixing the pearlescent pigments obtained with at least one solvent and/or at least one radiation-curable component and/or at least one binding agent to obtain the printing ink, preferably an ink-jet ink.

14. Use of pearlescent pigments as claimed in one of claims 1 to 12, which comprise a substantially transparent platelet-shaped substrate having a density ps and a single optically active coating having a density $\rho_M$, having a $d_{90}$ value for the cumulative frequency distribution of the volume-averaged size distribution function in a range of from 3.5 to 15 $\mu$m in printing ink.

15. Use of pearlescent pigments as claimed in claim 14,
    **characterised in that**
    the printing ink is an ink-jet ink.


**Revendications**

1.  Encre d'imprimerie contenant des pigments nacrés et au moins un solvant et/ou au moins un composant durcissable par rayonnement et/ou au moins un liant, les pigments nacrés comprenant un substrat lamellaire essentiellement transparent, présentant une masse volumique ps, qui est choisi dans le groupe consistant en le mica naturel, le mica synthétique, les flocons de verre, les lamelles de SiO$_2$, les lamelles d'Al$_2$O$_3$ et les mélanges de ceux-ci, et, en tant que revêtement optiquement actif présentant une masse volumique $\rho_M$, une couche d'oxydes métalliques unique à grand indice de réfraction, **caractérisée en ce que**
    les pigments nacrés présentent une $d_{90}$ de la distribution des fréquences cumulées de la fonction de distribution granulométrique moyenne en volume, comprise dans la plage de 3,5 à 15 $\mu$m,

la relation entre la teneur en oxydes métalliques, en % en poids, rapportée au poids total des oxydes métalliques et du substrat, et l'épaisseur de couche moyenne de la couche d'oxydes métalliques, satisfaisant aux relations suivantes :

une teneur en oxydes métalliques de 30 à 80 % en poids pour une épaisseur moyenne de couche d'oxydes métalliques supérieure à 20 et allant jusqu'à 50 nm ;
une teneur en oxydes métalliques de 50 à 85 % en poids pour une épaisseur moyenne de couche d'oxydes métalliques supérieure à 50 et allant jusqu'à 75 nm ;
une teneur en oxydes métalliques de 59 à 89 % en poids pour une épaisseur moyenne de couche d'oxydes métalliques supérieure à 75 et allant jusqu'à 95 nm ;
une teneur en oxydes métalliques de 66 à 92 % en poids pour une épaisseur moyenne de couche d'oxydes métalliques supérieure à 95 et allant jusqu'à 125 nm ;
une teneur en oxydes métalliques de 69 à 96 % en poids pour une épaisseur moyenne de couche d'oxydes métalliques supérieure à 125 et allant jusqu'à 215 nm.

2. Encre d'imprimerie selon la revendication 1, **caractérisée en ce que** les pigments nacrés présentent une $d_{90}$ de la distribution des fréquences cumulées de la fonction de distribution granulométrique moyenne en volume comprise dans la plage de 4 à 13 $\mu$m.

3. Encre d'imprimerie selon l'une des revendications précédentes, **caractérisée en ce que** le substrat des pigments nacrés présente une hauteur moyenne hs comprise dans la plage de 40 à 150 nm.

4. Encre d'imprimerie selon l'une des revendications précédentes, **caractérisée en ce que** le substrat des pigments nacrés présente une hauteur moyenne hs comprise dans la plage de 50 à 140 nm.

5. Encre d'imprimerie selon l'une des revendications précédentes, **caractérisée en ce que** les pigments nacrés présentent une $d_{95}$ de la distribution des fréquences cumulées de la fonction de distribution granulométrique moyenne en volume comprise dans la plage de 5 à 20 $\mu$m.

6. Encre d'imprimerie selon l'une des revendications précédentes, **caractérisée en ce que** le revêtement optiquement actif des pigments nacrés est un revêtement à grand indice de réfraction, présentant de préférence un indice de réfraction $\eta_M > 2{,}0$.

7. Encre d'imprimerie selon l'une des revendications 1 à 6, **caractérisée en ce que** la couche d'oxydes métalliques des pigments nacrés contient des oxydes métalliques qui sont choisis dans le groupe consistant en l'oxyde de titane, l'oxyde de fer, l'oxyde de cérium, l'oxyde de chrome, l'oxyde d'étain, l'oxyde de zirconium, l'oxyde de cobalt et les mélanges de ceux-ci, ou en est constituée.

8. Encre d'imprimerie selon l'une des revendications précédentes, **caractérisée en ce que** l'encre d'imprimerie contient 0,1 à 30 % en poids d'un pigment nacré, par rapport au poids total de l'encre d'imprimerie.

9. Encre d'imprimerie selon l'une des revendications précédentes, **caractérisée en ce que** l'encre d'imprimerie est à base d'un solvant organique et/ou d'eau, et que la proportion du solvant organique et/ou de l'eau est, par rapport au poids total de l'encre d'imprimerie, de 10 à 95 % en poids.

10. Encre d'imprimerie selon l'une des revendications précédentes, **caractérisée en ce que** l'encre d'imprimerie est une encre durcissable par rayonnement.

11. Encre d'imprimerie selon l'une des revendications précédentes, **caractérisée en ce que** l'encre d'imprimerie est une encre fusible.

12. Encre d'imprimerie selon l'une des revendications précédentes, **caractérisée en ce que** l'encre d'imprimerie est une encre pour jet d'encre.

13. Procédé de fabrication de l'encre d'imprimerie selon l'une des revendications précédentes, **caractérisé en ce que** le procédé comprend les étapes suivantes :

(a1) classification des substrats lamellaires sensiblement transparents,

(b1) application, sur le substrat classé obtenu dans l'étape (a1), d'une couche unique, optiquement active, ayant de préférence un grand indice de réfraction, avec obtention d'un pigment nacré présentant une $d_{90}$ de la distribution des fréquences cumulées de la fonction de distribution granulométrique moyenne en volume comprise dans la plage de 3,5 à 15 $\mu$m,

ou

(a2) application, sur des substrats lamellaires sensiblement transparents, d'une couche unique, optiquement active, ayant de préférence un grand indice de réfraction,

(b2) classification du pigment nacré obtenu en (a2), avec obtention d'un pigment nacré ayant une $d_{90}$ de la distribution des fréquences cumulées de la fonction de distribution granulométrique moyenne en volume comprise dans la plage de 3,5 à 15 $\mu$m,

puis

(c) mélange des pigments nacrés obtenus à au moins un solvant et/ou au moins un composant durcissable par rayonnement et/ou au moins un liant, avec obtention de l'encre d'imprimerie, de préférence une encre pour jet d'encre.

14. Utilisation, dans une encre d'imprimerie de pigments nacrés selon l'une des revendications 1 à 12, qui comprennent un substrat lamellaire sensiblement transparent ayant une masse volumique ps et un revêtement unique, optiquement actif, ayant une masse volumique $\rho_M$, présentant une $d_{90}$ de la distribution des fréquences cumulées de la fonction de distribution granulométrique moyenne en volume comprise dans la plage de 3,5 à 15 $\mu$m.

15. Utilisation de pigments nacrés selon la revendication 14, **caractérisée en ce que** l'encre d'imprimerie est une encre pour jet d'encre.

$$V_1 = 2\,\pi\,r_S^{\,2}\,d_M$$

$$V_2 = 4/3\,\pi\,d_M^{\,3} + \pi^2\,d_M^{\,2}\,r_S$$

$$d_M$$

$$r_S$$

Substrat $h_S$

Beschichtung

$$V_3 = \pi\,d_M^{\,2}\,h_S + 2\pi\,r_S\,d_M\,h_S$$

**Abb. 1: Substrat S und Beschichtung M**

**EP 2 449 040 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009010288 A2
- EP 1554345 B1
- DE 19727767 A
- US 20060223910 A1
- US 6019831 A
- DE 102004041592 A1
- DE 10315775 A1
- DE 19618569 A1
- US 20080017076 A1
- DE 102007041027 A1
- DE 60318235 T2
- JP 2003080836 A
- EP 1727864 A1
- EP 1682622 A1
- WO 2004087816 A2